# EUROPEAN PATENT APPLICATION

(11) **EP 4 787 258 A1**
(43) Date of publication of application: **05.08.2026**
(21) Application number: 26155913.2
(22) Date of filing: 03.02.2026
(51) Int. Cl.: G06Q 10/0833, G06Q 30/018, G06Q 50/02

(54) **SYSTEMS, METHODS, AND DEVICES FOR COMMODITY TRACEABILITY AND TESTING ACROSS SUPPLY CHAIN NETWORKS**

(30) Priority: 03.02.2025 US 202563753095 P; 25.07.2025 US 202563850979 P; 02.02.2026 US 202619467331
(71) Applicant: ICE Benchmark Administration Limited, London EC4M 7DQ (GB)
(72) Inventor: DE RUIG, Clive, London EC4M 7DQ (GB); BRANDON, Toby, London EC4M 7DQ (GB); HILL, Andrew, London EC4M 7DQ (GB); HOOPER, Gary, London EC4M 7DQ (GB); RHODES, Paul, London EC4M 7DQ (GB); SKILLETT, David, London EC4M 7DQ (GB); EVANS, Thomas, London EC4M 7DQ (GB)
(74) Representative: v. Bezold & Partner Patentanwälte - PartG mbB

(57) **Abstract**

Systems and methods for commodity traceability and testing. One or more of a data interface, an application programming interface ("API"), and an interactive graphical user interface ("GUI") receives, via a network, traceability data and other data associated with at least one commodity from data sources. A data mapper aggregates and maps the traceability and other data to a set of commodity-associated data. A data validator executes one or more validation tests of the commodity-associated data to determine whether the commodity-associated data set complies with one or more predefined requirements. The traceability and other data, the commodity-associated data set, and/or the validation results are stored in databases. One or more servers retrieve the traceability and other data, the commodity-associated data set and validation results and generate one or more interactive presentations. The GUI disseminates, via the network, the one or more interactive presentation to one or more user devices.

## Description

### TECHNICAL FIELD

The present disclosure relates to systems and methods for commodity traceability and data testing across supply chain networks, and more particularly to a technology platform that supports the submission, storing, review, validation, and sharing of traceability and commodity-associated data.

### BACKGROUND

Global supply chains for agricultural commodities such as coffee, cocoa, and other products have become increasingly complex, involving multiple intermediaries from farmers and cooperatives to processors, traders, exporters, importers, and retailers. This complexity creates challenges in tracking the origin and journey of commodities from production to consumption.

Traditional supply chain management systems often rely on paper-based documentation and/or fragmented digital systems that do not communicate effectively with one another. Each participant in the supply chain typically maintains their own records using different formats and standards, resulting in information silos that prevent comprehensive visibility and consistency across the entire chain. This fragmentation makes it challenging to aggregate and verify data about commodity origins, production practices, supply chains and compliance with applicable regulations.

Regulatory frameworks governing commodity imports and trade have become more stringent in recent years. For example, the European Union Deforestation Regulation ("EUDR") requires operators and traders to demonstrate that certain commodities and products are deforestation-free and lawfully produced. Voluntary frameworks (both managed by entities in the supply chain or by third-parties) are also increasing in their prevalence and standards. Compliance with such regulations and other frameworks demands comprehensive due diligence processes, including the collection and testing of geolocation data for production areas, documentation of legal compliance, and maintenance of detailed traceability records throughout the supply chain.

Current approaches to commodity traceability and due diligence often involve manual processes that are time-consuming, incomplete, error-prone, and difficult to scale. Many existing systems lack the capability to perform automated testing of submitted data or to provide real-time visibility into traceability. Additionally, the burden of collecting and managing due diligence information is often distributed unevenly across supply chain participants, with limited standardization of data formats and methodologies.

The lack of integrated platforms that can handle the full spectrum of traceability and due diligence requirements creates inefficiencies and increases the risk of errors and non-compliance. Supply chain participants often struggle to demonstrate the provenance of their commodities and to provide the level of transparency demanded by regulators, customers, consumers, and other stakeholders. These challenges are particularly acute for commodities sourced from regions with complex agricultural systems and multiple smallholder producers, and with complex supply chains.

There exists a need for comprehensive technology solutions that can streamline the collection, storage, testing, and sharing of commodity traceability and due diligence data across complex supply chain networks.

### SUMMARY

Aspects of the present disclosure relate to systems, methods and non-transitory computer-readable media for commodity traceability and data testing. The system may include a data interface configured to receive, via a network, data associated with at least one commodity from a plurality of data sources. The data may be associated with a supply chain process for the at least one commodity. The data may comprise traceability data and other data. A data mapper may be configured to aggregate the data from among the plurality of data sources and map the data to a set of commodity-associated data. A data validator may be configured to execute one or more tests of the set of commodity-associated data, including against reference data, to determine whether the set of commodity-associated data complies with one or more predefined methodologies of the system. One or more databases may be configured to store one or more of the received data, the set of commodity-associated data, reference data (e.g., reference maps), and validation results of the one or more validation tests. One or more servers may be configured to retrieve the received data, the set of commodity-associated data, reference data, and the validation results from the one or more databases and generate one or more interactive presentations. An interactive graphical user interface ("GUI") may be configured to disseminate, via the network, the one or more interactive presentations to one or more user devices.

### BRIEF DESCRIPTION OF DRAWINGS

Other objects and advantages of the present disclosure will become apparent to those skilled in the art upon reading the following detailed description of exemplary embodiments and appended claims, in conjunction with the accompanying drawings, in which like reference numerals have been used to designate like elements, and in which:
FIG. 1A is a functional block diagram of a commodity traceability ("CoT") platform, according to an aspect of the present disclosure;
FIG. 1B is a functional block diagram of a mapping module of a CoT system, according to an aspect of the present disclosure;
FIG. 2 is a flowchart illustrating example events in a supply chain process, according to an aspect of the present disclosure;
FIG. 3 is a diagram of an example traceability tree, according to an aspect of the present disclosure;
FIGs. 4A and 4B are flowcharts illustrating an example method for validation of traceability data in a commodity supply chain system performed by the CoT system, according to an aspect of the present disclosure;
FIG. 5 is a screenshot of an example of one or more CoT interfaces, namely a CoT dashboard ,according to an aspect of the present disclosure;
FIG. 6 is a screenshot of an example of the one or more CoT interfaces, namely a transfer parcel window, according to an aspect of the present disclosure;
FIG. 7 is a screenshot of another example of the one or more CoT interfaces, namely a parcels inventory window, according to an aspect of the present disclosure;
FIG. 8 is a screenshot of another example of the one or more CoT interfaces, namely a Lawful Production and Traceability Disclosure Statements window, according to an aspect of the present disclosure;
FIG. 9 is a screenshot of another example of the one or more CoT interfaces, namely an aggregators window, according to an aspect of the present disclosure;
FIG. 10 is a screenshot of another example of the one or more CoT interfaces, namely a view plots window, according to an aspect of the present disclosure;
FIG. 11 is a screenshot of another example of the one or more CoT interfaces, namely a plot detail window, according to an aspect of the present disclosure;
FIG. 12 is a screenshot of another example of the one or more CoT interfaces, namely a validation test summary window, according to an aspect of the present disclosure;
FIG. 13 is a functional block diagram of an example computer system, according to an aspect of the present disclosure.

The figures are for purposes of illustrating example embodiments, but it is understood that the present disclosure is not limited to the arrangements and instrumentality shown in the drawings.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

A detailed description of systems, devices, and methods consistent with examples of the present disclosure is provided below. While several examples are described, it should be understood that disclosure is not limited to any one example, but instead encompasses numerous alternatives, modifications, and equivalents. In addition, while numerous specific details are set forth in the following description in order to provide a thorough understanding of the examples disclosed herein, some examples may be practiced without some or all of these details. Moreover, for the purpose of clarity, certain technical material that is known in the related art has not been described in detail in order to avoid unnecessarily obscuring the disclosure.

The present disclosure relates to systems and methods for providing commodity traceability and validation across supply chain networks. While all testing and validation performed by the disclosed commodity traceability ("CoT") platform may be based on one or more predetermined methodologies specific to the CoT platform, the results may help users with regulatory compliance obligations, such as those established under deforestation regulations and other applicable laws governing commodity trade, or voluntary compliance obligations, such as those established by entities in the supply chain themselves or third parties. As described herein, the term "users" may include any entity within a supply chain (e.g., an origin trader, European (EU) trader, financing bank, origin exporter, processor or roaster, clearing member, aggregator, retailer, etc.).

Supply chain participants may face challenges in demonstrating compliance with regulatory and other requirements that mandate verification of commodity origins, production methods, and adherence to applicable legislation. The CoT platform described herein may address these challenges by providing a centralized technology solution for collecting, analyzing, testing, and sharing information across multiple stages of commodity supply chains.

The CoT platform may be configured to receive traceability data (as well as other data associated with a commodity, such as due diligence data) from various sources within supply chain networks. Such traceability data may encompass information related to production locations and physical movement of commodities through supply chains. The CoT platform may aggregate and process this combination of information through methodologies designed to assess compliance with predefined parameters.

The CoT platform may also be configured to analyze, review and/or test the information and related documentation to support users' compliance with the EUDR and of any risks of non-compliance with the EUDR, including their mitigation (e.g., as part of a physical flow traceability data methodology). The collection of traceability and other (e.g., due diligence) data may be referred to more generally as being part of one or more data specification or disclosure statement aspects of the platform, and the analysis, review and testing of this data may be referred to more generally as being part of one or more methodology test or disclosure statement review protocol aspects of the platform. The CoT platform may also be configured to use audits, inspections and tests as part of the collection, analysis, review, and testing of data to support due diligence requirements by checking the truthfulness, completeness and accuracy of submitted information, e.g., as part of checking information submitted in disclosure statements and subject to a lawful production and compliance risk data protocol.

In some cases, the CoT platform may support multiple categories of data collection and validation. Farm plot data may include geolocation information and production details for agricultural plots where commodities are produced. The farm plot data may include farm-geolocation data (e.g., geolocation polygons or geopoints of farm plots of land where relevant commodities were produced) and farmer data (e.g., farmer identifier) regarding the plot of production.

Physical flow data may track the movement, processing, and transformation of commodities as they progress through supply chains from production to final distribution. The physical flow data may include volume data, transport data, date data, operational processing and storage data, shipping data, product type and description, country of production, supplier information details and purchaser information details etc., including any associated evidence (e.g. scan of a bill of lading). Production data may include information from disclosure statements regarding systems and processes in place at warehousing or processing. Non-limiting examples of volume data may include one or more of volume information at the aggregator and after each operation event and warehousing point. Transport data may include, without being limited to, movement information of goods from aggregator and onwards to a warehouse or processing facility, and/or exporter. Shipping data may include, without being limited to, shipment information of products from origin country to EU (e.g., bill of lading information). Operational processing data may include, without being limited to, details of washing, milling, roasting or any processing of the products.

Production data may document systems and processes implemented to ensure adherence to applicable (e.g., legislation and/or risk mitigation) measures to ensure relevant commodities and products were produced in accordance with the relevant legislation of the country of production and that any non-negligible risks were mitigated (e.g. disclosure statements and related information regarding aggregators and along the supply chain, and regarding risk mitigation measures and processes). In general, the traceability and other (e.g., due diligence) data may include any suitable information as required by the EUDR or other regulations or frameworks to demonstrate compliance with the applicable traceability and regulatory or other requirements.

The CoT platform may implement automated validation processes to test submitted data against specified requirements and internal consistency parameters. These validation processes may identify potential issues, data inconsistencies, or other factors that could affect the status of relevant commodities. The CoT platform may also support risk assessment capabilities to help users evaluate and address potential risks associated with their commodity supply chains.

Data sharing capabilities of the CoT platform may enable controlled distribution of traceability information among authorized supply chain participants. The CoT platform may maintain confidentiality controls to protect sensitive commercial information while providing necessary transparency to support compliance obligations. Users may access relevant information about commodities they are purchasing or selling while maintaining appropriate data security measures.

The CoT platform may incorporate third-party testing and inspection capabilities to support the accuracy and reliability of submitted data. Such testing processes may include desk-based reviews and field inspections conducted by independent parties to confirm the completeness and accuracy of information provided by users.

Integration with regulatory reporting systems may enable the CoT platform to support the preparation and submission of required compliance documentation. The CoT platform may facilitate the creation of due diligence statements and other regulatory filings by users.

The CoT platform may be implemented using a distributed system architecture that includes multiple interconnected components configured to handle data processing, storage, and communication functions. The CoT platform architecture may comprise one or more main servers in electronic communication with various data sources and client devices through network connections. The main servers may include processing components, memory systems, and database storage configured to support the CoT platform's traceability and validation functions.

As part of the CoT farm plot data specification, the CoT platform may be configured to support the upload and storage of any desired farm plot data. As part of the CoT farm plot data methodology, the CoT platform may be configured to perform one or more tests designed to help users establish that the commodities or products did not contain and were not made from commodities produced in areas of deforestation, or in protected forest areas, and that the data is plausible and reasonable based on the test parameters. As part of the CoT physical flow traceability data specification, the CoT platform may be configured to support the upload and storage of any desired physical flow traceability data. As part of the CoT physical flow traceability data methodology, the CoT platform may be configured to perform one or more tests designed to establish the traceability of the commodities or products back to the aggregator and the identified production farm plots, and that the data is plausible and reasonable based on the test parameters. Disclosure statement data may also be collected related to physical flow traceability data and any answers reviewed against a protocol. As part of the CoT lawful production and compliance risk data specification, the CoT platform may be configured to support the upload and storage of disclosure statement responses and data. As part of the CoT lawful production and compliance risk data protocol, the CoT platform may be configured to perform one or more reviews designed to establish the presence of systems and processes to help users demonstrate lawful production of the commodities and products and that residual risks of non-compliance have been mitigated.

In some examples, the CoT platform may utilize one or more third-party applications, programs and/or systems (e.g., a risk-based, third-party desk and field-based inspection and testing program) to support the data collection and methodology test and review protocol processes. In some examples, it may be desirable that uploaded data and all desired systems, processes and data confirmed to be present in disclosure statement responses, be made available for inspection and testing on request to check the data for completeness, truthfulness and accuracy. In some examples, data checks and control points may be identified regarding the CoT platform data across farm plots, lawful production and risk systems and processes, and physical flow traceability for parcels. Risk-based and random samples may be subject to field and desk-based inspection and testing processes in accordance with CoT's data inspection and testing program.

In some examples, the CoT platform may support the submission of due diligence statements to the EU information system following the submission of all requisite data and information regarding a parcel uploaded to CoT and the passing of all desired methodology tests and review protocols.

Accurate data collection, analysis, reviews and tests, such as those provided by the CoT platform, are important because certain operators may be required to collect, verify and analyze all information and related documentation required under the EUDR to assess and identify risks of non-compliance, and as applicable mitigate non-compliance risks, and may not be permitted to supply the commodities or products on the EU market unless there is either no or only a negligible risk of non-compliance. In some examples, the CoT platform may be configured to publish or share the data specifications, methodologies and protocols (or summaries of the same) used to perform the review protocols and tests.

For commodities produced in certain countries and regions identified as being at low risk of deforestation by the European Commission ("EC"), operators may not need to perform risk assessments and, as applicable, undertake risk mitigation activities.

As part of the methodologies and protocols, including the CoT lawful production and compliance risk data protocol, the CoT platform may be configured to provide support to operators and traders for demonstrating the assessment and mitigation of risks in accordance with EUDR, and may provide, for example, questions, tests, dashboards, reports or other tools for methodologies, protocols, disclosure statements and risk assessments, including questions requiring confirmation of systems and processes regarding risk mitigation measures and procedures. Such tools for demonstrating accurate risk assessment and risk mitigation are important, because where a risk assessment reveals a non-negligible risk of non-compliance, certain operators may need to adopt risk mitigation procedures and measures adequate to achieve no or only a negligible risk in order to supply the commodities or products on the EU market.

In some examples, the CoT platform may be configured to support collection, review and testing of due diligence and traceability information of one or more of coffee and cocoa products. It is understood that these products represent non-limiting examples, and that the CoT platform may be configured to support data collection, review and testing of due diligence and traceability information of additional commodities applicable to the EUDR, or a new or other existing regulation over one or more supply chain networks. It is also understood that while the CoT platform is described herein as supporting compliance with EUDR requirements, such requirements are non-limiting and susceptible to change, and the CoT platform may be configured, in general, to support information collection, review and testing of traceability information and other (e.g., due diligence) information of one or more of coffee and cocoa products. It is understood that these products represent non-limiting examples, and that the CoT platform may be configured to support data collection, review and testing of due diligence and traceability of additional commodities subject to the EUDR, or a new or other existing regulation applicable to one or more supply chain networks. It is also understood that while the CoT platform is described herein as supporting compliance with EUDR requirements, such requirements are non-limiting and susceptible to change, and the CoT platform may be configured, in general, to support information collection, review and testing of due diligence and traceability of any suitable commodity in accordance with any desired regulatory requirement (e.g., under the EUDR or any other laws and/or regulations) or voluntary metrics.

The coffee and cocoa industries and countries of origin, for example, have made significant investments in supply chain sustainability processes and technology over many years. The CoT platform of the present disclosure builds on this infrastructure by allowing market participants in the supply chain to upload farm plot (e.g. farm-geolocation), physical-flow traceability (e.g., movement, merging and splitting of product, and processing of product including roasting, grinding, converting beans to butter and powder, etc.), and lawful production and compliance risk data (e.g. disclosure statement responses regarding internal management systems and processes) for testing and sharing.

The CoT platform of the present disclosure may be configured to provide an automated process of submitting, reviewing, testing, storing and sharing any traceability and due diligence data (e.g., farm plot, physical-flow traceability data, and lawful production and compliance risk data) associated with one or more products. The CoT platform may also be configured to provide (e.g., via a graphical user interface (GUI) and/or an application programing interface (API)) traceability and due diligence information (e.g., raw data, reference data including maps, verified results, and any other suitable information) to one or more users along the supply chain network. The CoT platform may include an accessible interface for uploading and reviewing data. The CoT platform may also be configured to convert data into one or more standard data formats, and may provide automated or manual tests or reviews. The CoT platform may enable sellers of commodities and products (for example) to easily upload and test or review their data, and may enable buyers of commodities and products (for example) to efficiently confirm that the data has been uploaded and the test and review protocol has occurred. The processes performed by the CoT platform may support buyers in their EUDR compliance requirements and their need to independently collect and check the traceability and due diligence data related to commodities and products they trade, and which may vary from supplier to supplier. Sellers may also easily share the status of commodities and products regarding the associated CoT data uploaded and whether this has been reviewed or tested and other required data with buyers via interaction with the CoT platform (e.g., via a GUI and/or API), without disclosing sensitive or confidential supply chain information.

The CoT platform may be configured, in some examples, to execute a series of tests on and review traceability and due diligence data (e.g., farm plot data, physical-flow traceability data, and lawful production and compliance risk data) that is submitted for one or more products (e.g., product(s) associated with consignment(s) that are uploaded to the CoT platform as parcel(s)). The tests and reviews may be conducted in accordance with one or more predefined methodologies and protocols designed with regulatory requirements (e.g., EUDR) in mind. In some examples, the tests and reviews may be configured to assess traceability and due diligence data; to support the identification of any product(s) that are not deforestation-free, are produced in areas of protected forest, are not lawfully produced, are subject to non-negligible risks of non-compliance and/or otherwise are associated with implausible or unreasonable data according to the test and review parameters. The independent reviews and tests may provide both sellers and buyers with greater confidence in the quality of their data and status regarding due diligence and compliance of the underlying commodities and products, and may help to reduce the risk of non-compliance with the requirements of EUDR and/or other applicable laws and regulations. Provided the data has been provided and the tests and review protocols in respect of a commodity or product are passed, the CoT platform may accept the parcel and store all associated traceability and due diligence data alongside it.

In some examples, the CoT platform may be used to help suppliers satisfy their due diligence obligations under the EUDR (and/or other laws and regulations) and evidence the status of their commodities and products regarding the CoT's tests and review to potential buyers before they are traded, thereby facilitating the trading of compliant commodities and products (e.g., coffee green beans, cocoa, and/or their derived products such as chocolate and roasted coffee) within the EU. For example, when a consignment passes from a seller to a buyer, the seller may record the transfer within the CoT platform and the associated traceability and due diligence data would remain with that parcel in the CoT platform. The buyer of the consignment may be able to view certain traceability and due diligence data for the parcel via the CoT platform, such as a list of plots from which the product was sourced. The CoT platform may ensure that more sensitive traceability and due diligence data (e.g., a full chain of custody and physical movement of the product) remains confidential, unless, in certain examples, the seller chooses to make this information visible to the buyer.

The CoT platform may support multiple data input formats and communication protocols to accommodate diverse data source requirements. File upload capabilities (e.g., via the GUI and/or API) may accept data in various formats including GeoJSON for geographic information or CSV for structured data, and standard document formats for supporting evidence. Batch processing capabilities may handle large-scale data uploads from enterprise systems and periodic reporting processes.

Data validation and preprocessing functions may be applied to information received from data sources before integration into the platform's main processing workflows. Input validation routines may verify data format, completeness, and basic consistency requirements. Data transformation processes may convert information from various source formats into standardized internal representations used by the platform's validation methodologies and storage systems.

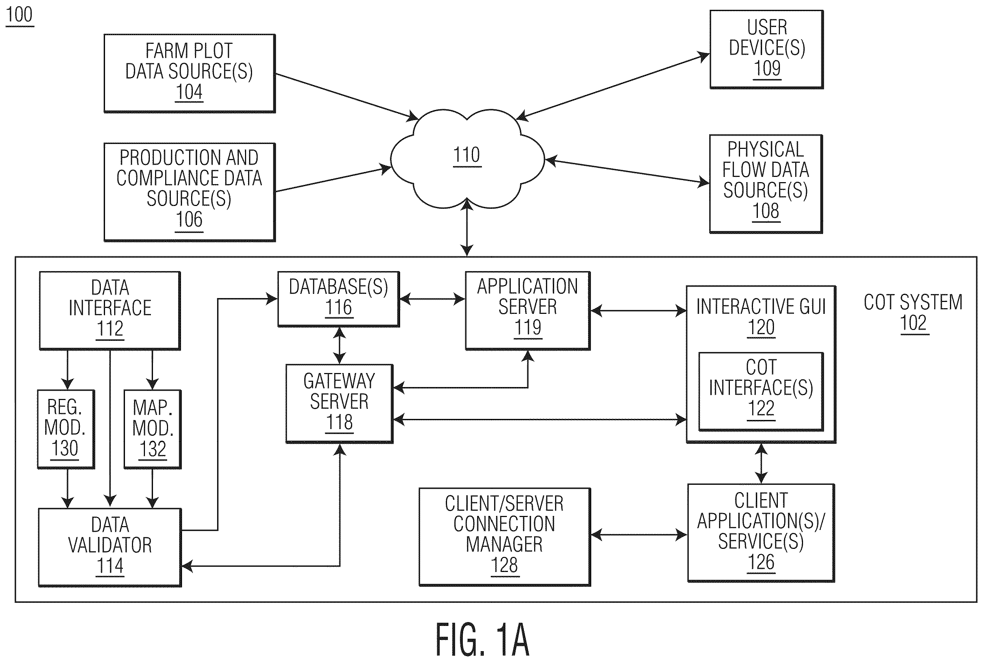

Referring now to FIG. 1A, a functional block diagram of an example CoT platform 100 is shown. The CoT platform 100 may include a CoT system 102, one or more farm plot data sources 104, one or more production and compliance data sources 106, one or more physical flow data sources 108, and one or more user devices 109. In some examples, one or more components of the CoT platform 100 may be communicatively coupled via one or more networks 110. The one or more networks 110 may include, for example, a private network (e.g., a local area network (LAN), a wide area network (WAN), intranet, etc.) and/or a public network (e.g., the Internet).

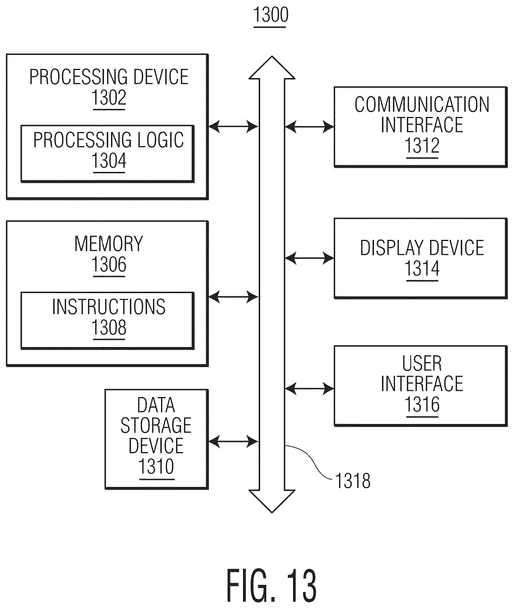

The one or more user devices 109 may include, without limit, any combination of mobile and/or stationary communication device such as mobile phones, smart phones, tablets computers, laptop computers, desktop computers, server computers or any other computing device configured to capture, receive, store and/or disseminate any suitable data. In some examples, the one or more user devices 109 may include one or more external computer systems configured to receive traceability, production, compliance, and/or risk information from the CoT system 102 and may provide additional analysis, user interaction and/or distribution functionality. In one embodiment, the one or more user devices 109 may include a non-transitory memory, one or more processors including machine readable instructions, a communications interface which may be used to communicate with the CoT system 102, a user input interface for inputting data and/or information to the one or more user devices 109 and/or a user display interface for presenting data and/or information on the one or more user devices 109. The one or more user devices 109 may also be configured to provide an interactive graphical user interface ("GUI") 120 generated by the CoT system 102 on the GUI of the one or more user devices 109. In some examples, user device(s) 109 may include computer system 1300 shown in FIG. 13.

The one or more farm plot data sources 104, one or more production and compliance data sources 106, and one or more physical flow data sources 108 may comprise electronic devices, computer systems, and input interfaces operated by different participants in the supply chain network. In an example, the one or more farm plot data sources 104, one or more production and compliance data sources 106, and one or more physical flow data sources 108 may be the one or more user devices 109. The one or more farm plot data sources 104, one or more production and compliance data sources 106, and one or more physical flow data sources 108 may be configured to capture, process, and transmit information related to commodity production, movement, processing, and lawful and other compliance activities. The one or more farm plot data sources 104, one or more production and compliance data sources 106, and one or more physical flow data sources 108 may be client devices that may include mobile phones, smartphones, tablet computers, laptop computers, desktop computers, and server computers configured to capture, receive, store, and transmit data to the CoT platform 100. The client devices may be operated by traders and operators, including exporters, importers, distributors and suppliers, and by farmers, aggregators, processors, transporters, warehouse operators, and other supply chain participants who generate or handle traceability and due diligence information.

In some cases, client devices may include specialized hardware components for data collection activities. Mobile devices may incorporate GPS receivers for capturing geolocation coordinates of farm plots and production areas. Camera systems integrated into smartphones and tablets may enable users to capture images of documentation, bills of lading, and other physical evidence supporting traceability claims. Barcode scanners and RFID readers may facilitate the identification and tracking of commodity parcels as they move through supply chain stages.

The CoT system 102 may include a data interface 112, a data validator 114, one or more databases 116, a gateway server 118, an application server 119, an interactive GUI 120, one or more client applications / services 126, a client server connection manager 128, a user registration module 130, and a mapping module 132. In some examples, one or more components 112-132 of the CoT system 102 may be configured to interact with each other via a data and control bus (not shown).

A data interface 112 of the CoT system 102 may be configured to receive data from farm plot data source(s) 104, production and compliance data source(s) 106, and physical flow data source(s) 108 via a structured data specification and upload process. The data interface 112 may be configured to obtain the data through any suitable electronic data collection technique. For example, the data interface 112 may obtain data through or more data feeds, one or more file transfers (including, in some examples, one or more secure file transfers), and/or by data being pushed to the CoT system 102. In some examples, the data interface 112 may include security protection (e.g., encryption, decryption) to protect the integrity of the obtained data.

In some examples, the data interface 112 may perform one or more of filtering, data normalization, data reformatting, data aggregation and the like. In some examples, electronic data that may be obtained by the data interface 112 may include data that may be unable to be processed, data that includes one or more errors and the like. In some examples, different sources among farm plot data source(s) 104, production and compliance data source(s) 106, and physical flow data source(s) 108 may transmit data with various unique, non-standard values and/or data formats (e.g., proprietary formats). Furthermore, data content may correspond to different forms of data, such as different currencies, date formats, time periods, etc. Non-limiting examples of data filtering that may be performed by the data interface 112 may include excluding null data values, excluding corrupted data, excluding outlier data values (e.g., a data value outside of a pre-defined value range, outside of a pre-defined time range) and the like.

In some examples, the data interface 112 may reformat the collected data to one or more common formats and/or normalize the collected data. In some examples, the data interface 112 may be configured to aggregate and/or combine at least a portion of the collected data (e.g., according to one or more predefined categories (such as a type of data, one or more predetermined time periods, etc.)).

The data interface 112 may be coupled to a user registration module 130 configured to manage user registration, authentication, and access control within the CoT system 102. The user registration module 130 may be configured to receive registration requests from users via one or more of farm plot data source(s) 104, production and compliance data source(s) 106, physical flow data source(s) 108, and user device(s) 109, and may process user credentials for authentication purposes. In some examples, the user registration module 130 may maintain user account information, manage user roles and permissions, and control access to various functions and data within the CoT system 102. The user registration module 130 may also be configured to verify user identities, manage session tokens, and enforce security policies for user access. In some cases, the user registration module 130 may support different membership categories and may apply appropriate access controls based on user classifications and supply chain relationships.

The one or more farm plot data sources 104 may include agricultural monitoring systems that may provide data sources for farm-level information collection. These systems may include GPS mapping devices used to define farm plot boundaries and measure agricultural areas. Soil sensors, weather monitoring stations, and crop monitoring equipment may generate data related to production conditions and agricultural practices. Farm management software systems may compile production records, harvest data, and farmer identification information that supports traceability requirements.

The data interface 112 of CoT system 102 may support file uploads from the one or more farm plot data sources 104 using, for example, a GeoJSON format for farm plot data submission. For example, a GeoJSON format may provide a standardized approach for encoding geographic data structures and may be compatible with the format requirements of due diligence statement uploads. The GeoJSON format support may enable users to submit farm plot boundary information, coordinate data, and associated metadata through a consistent file structure that facilitates automated processing and testing. It is understood that the GeoJSON format represents a non-limiting example format, and that CoT system 102 may support any suitable format for farm plot submission, including, without being limited to a Shapefile format and/or keyhole markup language (KML) format.

The farm plot data may comprise geolocation information and related details for agricultural plots where commodities are produced. The farm plot data may include several data fields that may provide comprehensive information about agricultural production areas. For example, the farm plot data may include (without being limited to) data fields related to a production location (e.g., country of production), commodity type, farmer identification information, farm plot information and/or any other suitable fields. Non-limiting examples of data fields that may be provided by the farm plat data are described below.

For example, a ProducerCountry field may specify the country where commodity production occurs using, for example, a 2-letter country code format based on ISO 3166-1 alpha-2 standards. The ProducerCountry field may accept values such as "CI" for Côte d'Ivoire or "BR" for Brazil, and the specified country may correspond to values within a list of supported countries maintained by the CoT platform 100.

A Commodity field may identify the type of agricultural product produced on the farm plot. The Commodity field may accept standardized values such as "coffee" or "cocoa" to specify the primary commodity type associated with the agricultural area. This field may enable the CoT platform 100 to apply commodity-specific validation rules and processing requirements during data analysis operations.

A CTOFarmerID field may provide unique identification for individual farmers within the CoT platform 100. The CTOFarmerID may include a unique identifier assigned by the user submitting the farm plot data. Multiple farm plots may be associated with the same CTOFarmerID value, enabling the CoT platform 100 to track agricultural areas operated by individual farmers across different locations or production periods.

A CTOPlotID field may provide unique identification for individual farm plots within the CoT platform 100. The CTOPlotID may include a unique identifier assigned by the user for each specific agricultural area. The CTOPlotID field may be configured to maintain uniqueness for each combination of ProducerCountry and Commodity values, ensuring that farm plots can be distinctly identified within CoT platform 100.

A DateofMapping field may specify a temporal validity of farm plot information. The DateofMapping field may indicate the date when the farm plot data was current or when mapping activities were conducted. This temporal information may enable the CoT platform 100 to manage changes in farm plot characteristics over time and ensure that validation processes of data validator 114 use appropriate reference data for the specified time period.

A Geometry field may define the spatial characteristics of farm plots through coordinate information. The Geometry field may accept either polygon data defining the outline and boundary of the farm plot or point data indicating a specific physical location within the agricultural area. When point data is provided, the CoT system 102 may require additional area information to be specified through a separate field. The Geometry field may enable the CoT system 102 to perform spatial analysis operations including (without being limited to) deforestation detection, protected area overlap assessment, and geographic consistency validation.

An Area field may specify the size of farm plots (for example, in hectares). The Area field may be provided, for example, when the Geometry field contains point data rather than polygon boundaries. In such cases, the Area field value may be limited to a predetermined area (e.g. no more than about four hectares). This area limitation may ensure that point-based representations are used only for smaller agricultural areas where detailed boundary mapping may not be practical or available.

The CoT system 102 may implement specific requirements for size reasonability based on area measurements. For example, farm plots exceeding a predetermined size or falling below a minimum size may be rejected.

A Variety field may provide additional commodity specification for certain crop types. For example, for farm plot data related to coffee production, the Variety field may specify either "arabica" or "robusta" to indicate the specific coffee variety cultivated on the agricultural area. This variety of information may enable the CoT system 102 to apply variety-specific validation rules and processing requirements during data analysis operations (e.g., via data validator 114).

An AggregatorIDs field may establish connections between farm plots and supply chain aggregators. The AggregatorIDs field may reference one or more aggregator identifiers from a separately maintained list of aggregators within the CoT platform 100. This field may enable the CoT platform 100 to link farm-level production data with supply chain participants who collect and process commodities from the specified agricultural areas.

The farm plot data may also include optional data fields that provide additional context and identification information for farm plots. Optional fields may include (without being limited to) ProducerName for farmer identification, NationalFarmerID and NationalPlotID for integration with national identification systems, DataProvider information to indicate data source organizations, and ProductionPlace details for additional geographic context. These optional fields may enhance the data management capabilities of CoT platform 100 while maintaining flexibility for different user requirements and data availability scenarios.

In some examples, the CoT system 102 may utilize underlying information and documentation to support uploaded farm plot data. Such supporting materials may be maintained by users and may be made available for inspection and testing processes conducted by the CoT platform 100 and/or third-party testing services. The documentation requirements may ensure that farm plot data submissions can be tested and assessed through independent assessment processes.

The CoT system 102 may include a mapping module 132 configured to perform standardization and processing of farm plot data received from among farm plot data source(s) 104, production and compliance source(s) 106 and physical flow data source(s) 108. In some examples, mapping module 132 may select (e.g., filter) and aggregate data from among farm plot data source(s) 104, production and compliance source(s) 106 and physical flow data source(s) 108 (and that may be stored in database(s) 116) and map the aggregated data to a set of commodity-associated data that may be utilized by data validator 114 for performing one or more tests. In some examples, mapping module 132 may be configured to generate, select and aggregate the data in response to detection of an event associated with a commodity (and/or product), and may generate a set of commodity-associated data for the corresponding detected event. In some examples, the data that is selected and aggregated to create the set of commodity-associated data for input to data validator 114 may depend on the type of event that is detected. For example the data that is selected and aggregated from among farm plot data source(s) 104, production and compliance source(s) 106 and physical flow data source(s) 108 (and/or database(s) 116) may depend on whether the event is related to a parcel creation event, a transport event, an operation event, a warehouse event and/or a shipping event. In some examples, a mapping module may aggregate traceability data together with other data (e.g., production data and/or compliance data) to create the set of commodity-associated data (e.g., for each detected event).

In some examples, the mapping module 132 may be configured to handle coordinate transformation, format conversion, and spatial data processing for geographic information associated with farm plots. In some examples, the mapping module 132 may convert farm plot data from various input formats into standardized internal representations used by the CoT system 102. The mapping module 132 may also be configured to perform coordinate system transformations to ensure consistency across farm plot data received from different sources. In some cases, the mapping module 132 may process polygon boundary data and point location data, validate geometric structures, and prepare spatial data for subsequent tests performed by the data validator 114. The mapping module 132 may also support the generation of GeoJSON format outputs for compatibility with reporting requirements.

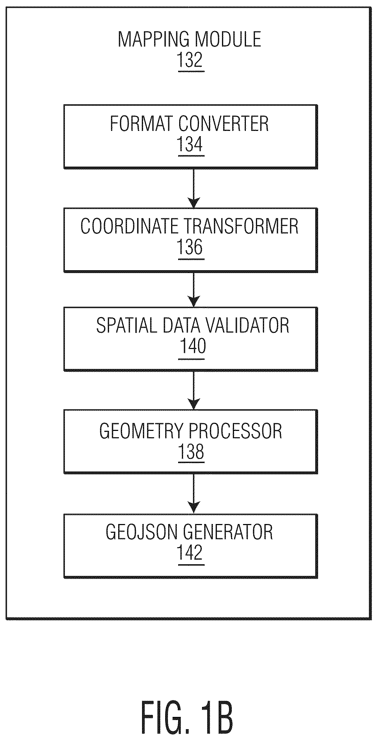

Referring now to FIG. 1B, a functional block diagram of an example mapping module 132 is shown. The mapping module 132 may include a format converter 134, a coordinate transformer 136, a geometry processor 138, a spatial data validator 140, and a GeoJSON generator 142. In some examples, the mapping module 132 may be configured to receive farm plot data from the one or more farm plot data sources 104 and process the data through a series of interconnected components before passing validated spatial data as part of the set of commodity-associated data to the data validator 114.

The format converter 134 may be configured to receive farm plot data in various formats from the one or more farm plot data sources 104 and convert the received data into a standardized internal format used by the CoT system 102. In some examples, the format converter 134 may accept data in multiple input formats including GeoJSON, JSON, and other geographic data formats. The format converter 134 may parse incoming data structures, extract relevant data fields, and transform the data into a consistent internal representation that can be processed by subsequent components of the mapping module 132.

The coordinate transformer 136 may be coupled to the format converter 134 and configured to receive standardized data from the format converter 134. The coordinate transformer 136 may be configured to perform coordinate system transformations to ensure consistency across farm plot data received from different sources. In some examples, the coordinate transformer 136 may convert coordinates from various geographic coordinate systems into a common reference system used by the CoT system 102. The coordinate transformer 136 may also be configured to handle different coordinate formats, including latitude/longitude pairs, projected coordinates, and other spatial reference representations.

The spatial data validator 140 may be coupled to the coordinate transformer 136. The spatial data validator 140 may be configured to validate geometric structures before the data validator 114 performs additional validation tests. In some examples, the spatial data validator 140 may perform preliminary geometric validation including checks for polygon closure, self-intersection detection, boundary vertex confirmation, and hole detection. The spatial data validator 140 may identify and flag geometric issues that could affect subsequent validation processes performed by the data validator 114.

The geometry processor 138 may be coupled to the spatial data validator 140. The geometry processor 138 may be configured to process polygon boundary data and point location data associated with farm plots. In some examples, the geometry processor 138 may perform geometric operations including boundary extraction, area calculations, centroid determination, and spatial relationship analysis. The geometry processor 138 may also be configured to handle both polygon representations defining farm plot boundaries and point representations indicating specific locations within agricultural areas.

The GeoJSON generator 142 may be coupled to receive processed data from one or more components of the mapping module 132. The GeoJSON generator 142 may be configured to generate GeoJSON format outputs for compatibility with reporting requirements. In some examples, the GeoJSON generator 142 may produce formatted output files suitable for submission to regulatory information systems, including due diligence statement uploads. The GeoJSON generator 142 may also be configured to generate GeoJSON representations of validated farm plot data for storage in the one or more databases 116 or for dissemination to authorized users via the interactive GUI 120.

Referring back to FIG. 1A, the data interface 112 may receive lawful production and compliance risk data from the one or more production and compliance data sources 106. The one or more production and compliance data sources 106 may include devices with an interactive graphical user interface ("GUI") configured to display information and receive user input. The lawful production and compliance risk data may be generated through a structured disclosure statement process. These data collection methods may enable the CoT system 102 to assess and document compliance systems and risk mitigation measures implemented throughout commodity supply chains. The disclosure statement-based approach may provide a standardized framework for evaluating whether supply chain participants have established appropriate internal management systems to support compliance with applicable legislation and regulatory requirements, and voluntary frameworks.

The CoT system 102 may utilize disclosure statements to gather information regarding systems, procedures, and processes implemented by aggregators and other supply chain entities. These disclosure statements may focus on supporting users in demonstrating that commodities submitted to the CoT system 102 were lawfully produced and that appropriate risk mitigation measures have been implemented where necessary. The disclosure statement process may require supply chain participants to confirm the presence of specific systems and processes before their operations can be referenced in physical flow traceability data within the CoT system 102.

The CoT system 102 may implement disclosure statement-based data collection instruments for lawful production and compliance risk assessment. The disclosure statements may be used to collect and analyze information regarding these systems, procedures and processes as they relate to making sure: (i) the commodities and related products contained in or used to make the parcel were lawfully produced; (ii) as required, appropriate compliance risk mitigation was exercised; and (iii) each product parcel supplied by an aggregator contains or is made only from commodities produced on some or all the farm plots associated with the product parcel within the provided physical flow traceability data, and no other farm plots.

A Aggregator Systems Disclosure Statement may be used to collect information regarding aggregators and the types of internal management systems for aggregators and supply chains for each production country, along with information regarding supply chain communication, grievances and compliance violations. The Aggregator Systems Disclosure Statement may be designed to help assess whether a user has reliable systems and processes in place for aggregators and related supply chains to ensure compliance with, and provide reliable information related to, lawful production of commodities, including whether and how these systems are audited. It also seeks to obtain information about appropriate communication regarding EUDR requirements and effective grievance management procedures, along with information regarding complaints, compliance breaches and legal proceedings.

In some examples, a Lawful Production and Compliance Risk Disclosure Statement may be used to determine how these systems ensure compliance with the applicable legislation for each specified lawful production topic in each production country and how remaining risks are mitigated. The Lawful Production and Compliance Risk Disclosure Statement may be used to assess how the internal management systems ensure compliance with applicable local laws and mitigate residual risks of non-compliance with, for example, the EUDR. Users may be required to confirm whether they have internal management systems in place covering all aggregators (and the related supply chains) in each production country to collect, verify and risk assess information which shows compliance with relevant legislation regarding each applicable lawful production topic, including the specific laws identified by local legal and sustainability experts for each lawful production topic as applicable for each production country. Lawful production topics include land use rights, environmental protection, third-party rights and Free, Prior, and Informed Consent ("FPIC"), labor and human rights, and tax, anti-corruption, trade, and customs regulations.

A Tax, Anti-Corruption, Trade and Customs Regulations ("TACTC") Disclosure Statement may be a shorter version of the Lawful Production and Compliance Risk Disclosure Statement covering those topics only. The TACTC Disclosure Statement may be available for users that intend to submit traceability information for commodities or products related to part of a supply chain in a country of production where an Aggregator Systems Disclosure Statement and a Lawful Production and Compliance Risk Disclosure Statement have already been completed where the commodities, or commodities used to derive products, were sourced. The TACTC Disclosure Statement may collect information regarding the systems and processes in place for the applicable steps in the supply chain to ensure and demonstrate compliance with applicable legislation in each country of production in terms of tax, anti-corruption, trade and customs regulations.

A Physical Flow Traceability Disclosure Statement may collect information on facilities (e.g., warehouses and factories) including traceability system information. The Physical Flow Traceability Disclosure Statement may be used to indicate whether systems and processes are in place such that each parcel is identified, recorded, and tracked through each and every step in each warehousing and operational facility and no untraced commodities or products are contained in or used to make such parcel. The Physical Flow Traceability Disclosure Statement may also be used to indicate whether systems and processes are in place to associate each quantity of physical commodities or product and its identifier with a corresponding ParcelID.

An Exchange Warehouse Disclosure Statement may be a version of the Physical Flow Traceability Disclosure Statement designed specifically in relation to warehouses approved by the exchanges with which the CoT platform 100 will interact. This may not be available to users in the same way as the other disclosure statements. Instead, exchange warehouse keepers may complete the statement via email interactions and a summary of the responses may be available for users to view. Users who use an exchange warehouse as part of an exchange delivery procedure may be able to adopt the responses for the relevant warehouse as if they were their own.

A Transport and Shipping Disclosure Statement may collect information on transport and shipping systems and processes, including whether systems and processes are in place such that each parcel is identified, recorded and tracked through each transport and shipping event and no untraced commodities or products are contained in or used to make such parcel. The Transport and Shipping Disclosure Statement may indicate whether systems and processes are in place to associate each quantity of physical commodities or product and its identifier with the corresponding ParcelID.

Where the internal management system reveals a risk of non-compliance with relevant legislation, users may need to confirm they have implemented the required mitigation measures specified regarding each lawful production topic. If a user does not confirm an internal management system is in place for each lawful production topic, or does not confirm that the required mitigation measures have been adopted, the aggregators and their related supply chains may not be eligible to be referenced in a parcel within the CoT platform 100. In some examples, CoT system 102 may prompt user(s), via interactive GUI 120, to confirm that they have implemented the indicated mitigation measure(s) when CoT system 102 identifies a non-compliance risk, thereby automatically and immediately alerting user(s) to the identified risk, and providing a convenient user interface for automatically obtaining user input relating to the appropriate mitigation measures needed based on the most up-to-date regulations.

The data interface 112 may receive physical flow traceability data from the one or more physical flow data sources 108 through a structured upload process that tracks commodities and products through supply chain networks from initial aggregator supply to final distribution points. Physical flow traceability data may provide comprehensive documentation of commodity movement, processing, and transformation activities that occur between production and final delivery stages.

The one or more physical flow data sources 108 may include transportation and logistics systems. For example, vehicle tracking systems may provide location data and movement records for trucks, ships, and other transport vehicles carrying commodity parcels. Warehouse management systems may generate storage records, inventory data, and handling information for commodities held at storage facilities. Electronic documentation systems may capture bill of lading information, shipping manifests, and other transport-related documentation.

The one or more physical flow data sources 108 may include processing facility systems. For example, manufacturing execution systems may track the conversion of raw commodities into processed products, including weight measurements, processing parameters, and output specifications. Quality control systems may provide testing results, inspection records, and other data. Inventory management systems may track the flow of materials through processing operations and maintain records of input-output relationships.

The one or more physical flow data sources 108 may include electronic data interchange systems. These systems may facilitate automated data transfer from various supply chain systems. These systems may enable direct integration between existing enterprise resource planning systems, supply chain management software, and the CoT system 102.

The one or more physical flow data sources 108 may include document management systems. For example, electronic document repositories may store contracts, certificates, audit reports, and other documentation supporting lawful production claims. Digital signature systems may provide authentication capabilities for electronic documents submitted to the CoT platform 100. Content management systems may organize and maintain access to supporting documentation.

One or more application programming interfaces may provide standardized communication protocols for data exchange between different software systems and the data interface 112.

The data interface 112 may support file upload capabilities using JSON format text files for physical flow traceability data submission. The JSON format implementation may utilize defined objects and fields that provide standardized data structures for representing traceability events and commodity information. JSON format support may enable users to submit complex traceability data through structured file uploads that facilitate automated processing and validation by the CoT system 102.

Physical flow traceability data may be organized around the concept of parcels that represent specific quantities of commodities or products at different stages of the supply chain. A parcel may comprise a specified quantity of a single physical commodity product type, such as cocoa beans, cocoa butter, or coffee green beans, whose details are uploaded to the CoT platform 100. Each separate quantity of a single physical commodity or related product at each event along the supply chain may be designated as a parcel within the data structure of the CoT platform 100.

As described in detail below, the CoT platform 100 may implement a traceability tree concept that documents the sequence of events and transformations affecting commodities as they progress through supply chain networks. In some examples, the traceability tree may begin with initial supply events from aggregators and extend through all subsequent handling, processing, and distribution activities until commodities reach their final destinations. Each event in the traceability tree may be identified by a numeric event identifier that determines the chronological sequence in which events occurred. The combination of an event date and event ID may determine the chronological sequence of events within the same submission. Events from a previous submission are always assumed to have occurred before events in a subsequent submission for the same supply chain. Within a single submission the combination of event date, submission ID and event ID may determine the chronological sequence of related events.

In some examples, the CoT platform 100 may perform checks that event dates are not earlier for later events than for their predecessors (e.g., where either event depends upon the other).

The CoT platform 100 may support multiple event types that represent different categories of supply chain activities and transformations. For example, a CreateParcel event type may represent the initial sourcing of a product parcel from an aggregator, serving as the starting point for every traceability tree within the CoT platform 100. CreateParcel events may provide direct linkage to lists of eligible farmers identified in previously submitted farm plot data, ensuring that all subsequent traceability activities can be connected back to verified production sources. CreateParcel events may also provide other evidence that a parcel is valid, or that it is outside the scope of the regulation.

Transport event types may represent the movement of product parcels between different locations within supply chain networks. Transport events may document the movement of commodities (e.g., by truck, rail, air, water or other transportation methods between supply chain facilities. Transport events may include information about origin and destination locations, transportation dates, and carrier identification details that support comprehensive tracking of commodity movement.

Warehousing event types may represent the storage of product parcels at warehouse facilities or other storage locations. Warehousing events may document the receipt, storage, and release of commodities at distribution centers, processing facilities, or other storage points within supply chain networks. Warehousing events may include information about storage duration, facility identification, and handling procedures that affect commodity parcels during storage periods.

Operation event types may represent specified actions carried out on product parcels during processing, handling, or transformation activities. Operation events may encompass a wide range of supply chain activities including washing, processing of cocoa beans into liquor, butter or powder, milling, grading, roasting at processing facilities, and ownership changes that occur independently of transport or shipping activities. Operation events may also include the splitting or merging of product parcels when commodities are divided into smaller quantities or combined with other parcels.

The CoT platform 100 may support continuous processing capabilities for commodities and products that undergo extended processing operations where discrete event-by-event tracking may not be practical. Continuous processing support may enable the CoT platform 100 to handle manufacturing scenarios where commodities flow through processing equipment in continuous streams rather than discrete batches. For continuous processing operations, the CoT platform 100 may implement alternative tests that accommodate the continuous nature of the processing activities, as weight-testing of inputs and outputs may not be applicable on an event-by-event basis for such operations.

Shipping event types may represent the movement of products between countries through sea, land, or air transportation methods. Shipping events may be associated with bill of lading documents that provide official documentation of international commodity shipments. The CoT platform 100 may require users (e.g., prompt users via interactive GUI 120) to upload selected details to CoT platform 100 from bill of lading documents along with scanned copies of the complete documents for shipping events. In another example, this information may be provided by an API.

The CoT platform 100 may implement bill of lading document scanning and validation capabilities for shipping events. Bill of lading scanning functionality may enable users to upload digital copies of shipping documents that can be stored and referenced within a documentation system (e.g., stored in database(s) 116) of CoT platform 100. The CoT platform 100 may extract and validate specific information fields from bill of lading documents, including document identification numbers, document dates, gross weight measurements, vessel names, origin and destination port information, and sender and receiver details.

Bill of lading validation processes may compare information extracted from scanned documents with data fields submitted through the structured data entry processes of the CoT platform 100. This validation approach may help ensure consistency between official shipping documentation and traceability data submitted to the CoT platform 100, reducing the potential for data entry errors or inconsistencies in shipping information.

Each event type within the CoT platform 100 may require specific data fields that provide comprehensive information about the activities and transformations represented by the event. For example, an EventID field may provide unique identification for each event within the traceability tree, enabling the CoT platform 100 to maintain proper sequencing and relationships between different supply chain activities. EventDate fields may specify the dates when events occurred, providing temporal information that supports chronological tracking of commodity movement and processing.

Country and ToCountry fields may specify the geographic locations where events occur and, for transportation and shipping events, the destination countries when events involve cross-border movement of commodities. These geographic fields may enable the CoT platform 100 to track commodity movement across international boundaries and apply country-specific validation rules.

CreationType fields may indicate whether products were sourced from aggregators or whether pre-existing parcels from before specific regulatory effective dates are being incorporated into the traceability system. CropYear fields may specify the agricultural production period associated with commodities using standardized year format representations.

AggregatorID and AggregatorDocumentID fields may provide identification and documentation references for aggregator supply events. The AggregatorID field may reference aggregators from an eligible aggregator list (e.g., stored in database(s) 116) of CoT platform 100, while AggregatorDocumentID fields may provide references to contracts, waybills, or other relevant documents that connect aggregators with commodity purchases or transport activities.

FacilityID fields may provide unique identification for warehouses, processing facilities, or other locations where commodities are stored or processed. FacilityID values may reference facilities from an eligible facility list (e.g., stored in database(s) 116) of CoT platform 100, ensuring that only verified and compliant facilities are included in traceability data.

OperationType and OperationDescription fields may specify the types of operations carried out during Operation events. The CoT platform 100 may maintain (e.g., in database(s) 116) lists of valid operation types with options for free-text descriptions to accommodate diverse processing and handling activities. OperationReference fields may provide user-assigned references to specific operations for internal tracking purposes.

InputParcels and OutputParcels fields may define the relationships between product parcels consumed and produced by events. InputParcels lists may identify one or more input parcels that events consume during processing or handling activities. OutputParcels lists may identify one or more output parcels that events produce, with requirements for OutputParcels information only when output parcels differ from input parcels.

ParcelID fields may provide unique identification for product parcels produced by events. When events do not change product parcels, ParcelID values may remain unchanged to maintain continuity in parcel identification throughout the traceability tree.

Weight and measurement fields may capture quantitative information about product parcels at each event. NetWeight fields may specify net weight measurements in kilograms, excluding packaging materials. Weight information may be required at every stage in the supply chain to enable weight validation and ensure traceability accuracy.

Owner identification fields may document the entities that hold ownership of product parcels at different events. Owner Name, Owner Address, and Owner Email fields may identify owning entities at relevant events, providing ownership tracking capabilities throughout the supply chain.

Product specification fields may provide detailed information about commodity and product types. HSCode fields may correspond to harmonized system codes listed in regulatory annexes, while ProductType fields may specify particular types of products within broader HSCode categories. Product Description fields may provide optional free-text descriptions for additional product characterization beyond standardized ProductType classifications.

The CoT platform 100 may require underlying systems, information, and documentation to support uploaded physical flow traceability data. Supporting materials may include processing records, transportation documents, storage receipts, and other documentation that provides evidence for the traceability claims made in submitted data. This documentation may be maintained by users and made available for inspection and testing processes conducted by the CoT platform 100 and/or third-party testing services.

The data received by the data interface 112 from the farm plot data source(s) 104, the production and compliance data source(s) 106, and the physical flow data source(s) 108 may be sent to the data validator 114 for validation (e.g., after first passing through mapping module 132 to map the data to a set of commodity-associated data in a format suitable for validation). For example, the data validator 114 may execute a series of tests on the farm plot data to assess compliance with predefined requirements and data quality standards. These validation tests may be conducted through a farm plot data validation methodology that applies multiple assessment criteria to support users in evaluating the accuracy, consistency, and compliance of submitted farm plot information. In general, the data validator 114 may provide validation (e.g., testing) of a set of commodity-associated data against a set of predefined (specific) methodologies (e.g., as defined by CoT system 102).

In some examples, the methodology may require all mandatory data fields to be provided before testing can commence. Farm plot data that fails any test may be designated as ineligible for use with the physical flow traceability data within the CoT system 102. Users may be permitted to correct data errors and re-upload corrected information to address failures in cases where upload errors or data inconsistencies are identified.

The data validator 114 may implement geometry tests to assess the spatial accuracy and consistency of farm plot boundary information. These geometry tests may be applied specifically to farm plots defined using polygon representations rather than point-based location data. A boundary vertex test may evaluate whether farm plot polygons contain a sufficient number of coordinate points to define a valid geographic boundary. Farm plots with too few boundary vertices may fail this test due to insufficient spatial definition.

A self-intersection test may be used to examine farm plot polygon boundaries to identify cases where boundary segments cross or overlap with themselves. Farm plots with self-intersecting boundary segments may fail this test because such geometric configurations may indicate data errors or inconsistent boundary definitions that could affect spatial analysis accuracy.

The data validator 114 may conduct a polygon hole detection test to identify farm plot boundaries that contain internal gaps or excluded areas. Farm plot polygons containing holes may fail this test because such geometric structures may complicate spatial analysis operations.

A polygon closure test may be performed to verify that farm plot boundary coordinates form a complete, closed geometric shape. Farm plot polygons that are not properly closed may fail this test due to incomplete boundary definition that prevents accurate area calculations and spatial analysis operations.

The data validator 114 may perform deforestation tests to assess whether farm plots are located in areas affected by forest conversion activities. A deforestation overlap test may compare farm plot boundaries with deforestation mapping data to identify agricultural areas that overlap with regions where forest conversion occurred after a predetermined date. Farm plots that overlap with identified deforestation areas may fail this test based on deforestation-free requirements.

In an example, a forest overlap test may be performed to evaluate whether farm plots are located in areas currently identified as non-agricultural forest land. Farm plots that overlap with detected forest areas may fail this test because such locations may indicate potential conflicts between agricultural use claims and current land cover conditions.

The data validator 114 may implement a geopoint proximity test for farm plots defined using point-based location data rather than polygon boundaries. This test may assess whether point-based farm plot locations are positioned too close to identified deforestation areas. Farm plots with geopoint locations in close proximity to deforestation may fail this test due to potential association with forest conversion activities.

Protected area tests may be performed to assess whether farm plots are located within legally protected environmental areas. A protected area overlap test may compare farm plot boundaries with protected area mapping data to identify agricultural areas that overlap with legally designated conservation zones, national parks, or other protected land classifications. Farm plots that overlap with protected areas may fail this test due to potential conflicts with land use restrictions and conservation requirements.

The data validator 114 may conduct plot size tests to assess the consistency between reported farm plot areas and geometric representations. A geopoint size test may evaluate farm plots defined using point-based location data to determine whether the reported area exceeds a predetermined area (e.g., about four hectares). Farm plots recorded as geopoints with estimated areas greater than the predetermined area may fail this test because larger agricultural areas may utilize a polygon boundary definition for accurate spatial analysis.

Reasonability tests may be performed to assess the logical consistency and plausibility of farm plot data submissions. A farmer plot count test may evaluate whether individual farmers are associated with an implausibly high number of farm plots. For example, farmers with excessive numbers of associated farm plots may fail this test due to potential data errors or unrealistic agricultural operation scales.

A plot distance test may be performed to assess the geographic proximity of farm plots associated with the same farmer identifier. Farm plots that are located at significant distances from other plots with the same farmer identification may fail this test due to potential inconsistencies in farmer assignment or geographic implausibility.

The data validator 114 may implement a mapping date test to evaluate the temporal validity of farm plot mapping information. Farm plots with mapping dates that are far in the past (e.g., greater than a predefined number of days) may fail this test due to potential obsolescence of the geographic and agricultural information provided.

A plot overlap test may be performed to identify cases where farm plot boundaries overlap with other farm plots within the database(s) 116. Farm plots that overlap with other agricultural areas may fail this test due to potential conflicts in land use claims or data inconsistencies between different submissions.

Duplicate plot detection tests may be performed to identify farm plots that appear to be duplicated within the data of CoT platform 100. A same farmer duplication test may identify farm plots that are duplicated with identical farmer identification information. A different farmer duplication test may identify farm plots that appear to be duplicated but are associated with different farmer identifiers. Farm plots identified as duplicates may fail these tests due to potential data errors or conflicting land use claims.

The data validator 114 may conduct geometric shape analysis tests to assess the plausibility of farm plot boundaries. A shape analysis test may evaluate whether farm plot polygons have unusual or implausible geometric configurations that may indicate data errors or potentially inaccurate boundary definitions. Farm plots with very unusual shapes may fail this test due to potential inconsistencies with typical agricultural land use pattems.

A boundary spike detection test may be performed to identify farm plot polygons with sharp protrusions or irregular boundary features that may indicate data processing errors or artificial geometric modifications. Farm plots with boundary spikes may fail this test due to potential inaccuracies in boundary definition.

Size reasonability tests may be performed to assess whether farm plot areas fall within expected ranges for agricultural operations. An extremely large plot test may identify farm plots that exceed reasonable size thresholds for individual agricultural areas within specific countries or regions. An extremely small plot test may identify farm plots that fall below minimum size thresholds for viable agricultural operations. Farm plots that are extremely large or extremely small may fail these tests due to potential data errors or implausible agricultural configurations.

Geographic consistency tests may be performed to verify that farm plot locations are positioned within appropriate national boundaries and land use contexts. A country boundary test may assess whether farm plot coordinates are located within the specified producer country boundaries. Farm plots positioned outside of country boundaries may fail this test due to geographic inconsistencies between location data and country specifications.

A built-up area overlap test may be performed to identify farm plots that overlap with urban or developed areas where agricultural activities may not be appropriate or feasible. Farm plots that overlap with built-up areas may fail this test due to potential conflicts between agricultural use claims and actual land use conditions.

A water body overlap test may be performed to assess whether farm plots overlap with rivers, lakes, or other water features where agricultural production may not be feasible. Farm plots that overlap with water bodies may fail this test due to geographic implausibility of agricultural activities in aquatic environments.

The data validator 114 may implement temporal consistency validation through a location time-series test that evaluates changes in farm plot locations over time. Farm plots with location time-series mismatches may fail this test due to inconsistencies in reported geographic positions across different time periods.

A farmer data consistency test may be performed to assess the consistency of farmer identification and related information across multiple farm plot submissions. Farm plots with inconsistent farmer data may fail this test due to potential errors or conflicts in farmer identification information that could affect traceability accuracy.

The methodology tests and associated threshold parameters may be subject to continuous review and modification by the operators of CoT platform 100. Tests may be updated, removed, or supplemented based on regulatory changes, data quality requirements, and operational experience. Some tests may utilize reasonability thresholds that vary by country of production to account for regional differences in agricultural practices and land use patterns.

Under some regulatory regimes such as EUDR, it may be required that only the area a product came from be deforestation-free and deforestation elsewhere within a farm may not be a cause for failure. Therefore, in some jurisdictions, it may be preferable to test only the production area. Users may have "farm outline" polygons which represent the entire farm (e.g., in Brazil from the national register) and may not have a record of the specific production area for a crop. A single farm may include growing areas for multiple crops, grazing land, reserved forest, and other non-productive land.

The CoT platform 100 may offer a pre-processing tool that allows users to identify crop production area polygons within their farms. A reference map of crop growing areas may be sourced, for example, using a similar detection methodology to a deforestation reference map. A user may submit the farm outline polygons to the tool. The tool may overlay the farm outlines on the reference map and may produce an output file of crop polygons. There may be multiple crop polygons in each farm. An intersection between the polygons and the crop areas on the reference map may be calculated. Additional processing may be performed to ensure the resultant polygons are of a reasonable size and shape, including not allowing holes.

The data validator 114 may execute a series of tests on uploaded physical flow traceability data to assess consistency and reasonability. These tests may be conducted through a physical flow traceability data validation methodology that applies multiple assessment criteria to evaluate the accuracy and completeness of submitted traceability information. In some examples, the validation methodology may require all mandatory data fields to be provided before testing can commence.

The data validator 114 may implement linkage tests to ensure that physical flow traceability data forms accurate traceability trees connecting commodities back to their production sources. A linkage test may verify that traceability trees are provided from any parcel back to the aggregators from which the commodities contained in or used to make such parcels were sourced. The linkage test may also verify connections to sets of farm plots where the commodities were produced, ensuring that all traceability chains can be traced to verified production locations.

Event sequence testing may be performed to assess the chronological consistency of events within traceability trees. A time sequence consistency test may evaluate whether the linkage of events and parcels forms a consistent sequence in time based on the EventDate information provided for each event. Events that occur out of chronological order or that have inconsistent temporal relationships may fail this test due to potential data errors or logical inconsistencies in the reported sequence of supply chain activities.

The data validator 114 may conduct product type consistency testing to ensure that input and output products are appropriate for the specified event types. A product type consistency test may evaluate whether the types of commodities or products consumed and produced by events are logically consistent with the operations being performed. For example, processing events that convert cocoa beans into cocoa butter may be expected to have cocoa beans as inputs and cocoa butter as outputs, while transport events may be expected to have identical input and output product types.

Weight consistency testing may be performed to assess the weight relationships between input and output parcels for different event types. An input-output weight consistency test may evaluate whether the weights of products consumed and produced by events are consistent with the specified operations and expected conversion ratios. Processing events may be expected to demonstrate appropriate weight relationships between raw materials and finished products based on typical conversion factors for the specified operations.

Supply chain weight consistency testing may be performed to track weight relationships through multiple events to ensure that commodities maintain appropriate weight throughout the supply chain. A supply chain weight test may evaluate whether product weights remain, within a certain tolerance, consistent through transport and storage events where no processing or transformation occurs, and whether weight changes during processing events correspond to expected conversion ratios ranges for the specified operations.

The data validator 114 may implement eligibility tests to ensure that aggregators and facilities referenced in physical flow traceability data have completed required compliance assessments. An aggregator eligibility test may test whether each identified aggregator matches an eligible aggregator from completed Aggregator Systems Disclosure Statements and Lawful Production and Compliance Risk Disclosure Statements. Aggregators that are not the subject of completed required disclosure statements or that have not satisfied disclosure statement review requirements may cause traceability data to fail this test. The data validator 114 may implement tests to verify that Aggregator Systems Disclosure Statements have been correctly completed, which may require the completion of questions relating to internal management systems, grievance mechanisms and communications and violations. The data validator 114 may implement tests to verify that Physical Flow Traceability Disclosure Statements or Exchange Warehouse Disclosure Statements have been correctly completed, which may require the completion of questions relating to traceability systems. The data validator 114 may implement tests to verify that Lawful Production and Compliance Risk Disclosure Statements have been correctly completed, which may require the completion of questions relating to land use rights, environmental protection, third-party rights, labor rights and human rights, tax, anti-corruption, trade and customs. The data validator 114 may implement tests to verify that Transport and Shipping Disclosure Statements have been correctly completed, which may require the completion of questions relating to traceability systems.

A facility eligibility test may be performed to verify that each identified facility matches an eligible facility from completed Physical Flow Traceability Disclosure Statements or an eligible warehouse from completed Exchange Warehouse Disclosure Statements. Facilities that are not the subject of completed required disclosure statements or that have not satisfied disclosure statement review requirements may cause traceability data to fail this test.

Country eligibility testing may be performed to assess whether countries referenced in traceability data have appropriate compliance documentation. A production country eligibility test may be performed to verify that each country of production matches an eligible country from completed Lawful Production and Compliance Risk Disclosure Statements. Countries that lack required compliance documentation may cause traceability data to fail this test.

A transport country eligibility test may be performed to verify that transport or shipping event countries match eligible countries from completed transport and shipping disclosure statements. Transport activities in countries that lack required disclosure statement completion may cause traceability data to fail this test.

The data validator 114 may conduct geographic reasonability testing to assess the plausibility of relationships between aggregators and associated farm plots. A distance reasonability test may be performed to evaluate whether there is reasonable geographic proximity between aggregators and the farm plots associated with their commodity supply activities. Aggregators that are located at excessive distances from their associated farm plots may fail this test due to potential logistical implausibility or data inconsistencies.

Volume reasonability testing may be performed to assess whether the quantities of commodities supplied by aggregators are consistent with the productive capacity of their associated farm plots. A volume-capacity consistency test may be performed to evaluate whether the volume of physical commodities supplied by each aggregator per crop year is reasonable based on the number and size of associated farm plots. Aggregators that report commodity volumes significantly exceeding the expected productive capacity of their associated agricultural areas may fail this test due to potential data errors or unrealistic production claims.

The data validator 114 may implement bill of lading testing processes for shipping events that include scanned documentation. A bill of lading consistency test may compare data fields extracted from scanned bill of lading documents with corresponding information submitted through structured data entry fields. Discrepancies between scanned document information and submitted data fields may cause shipping events to fail this test due to potential data entry errors or document inconsistencies.

Bill of lading document testing may be performed to assess the completeness and quality of scanned documentation submitted for shipping events. Document quality tests may be performed to evaluate whether scanned bill of lading documents are legible and contain all required information fields. Shipping events with incomplete or illegible bill of lading documentation may fail these document tests.

The data validator 114 may implement continuous processing testing for events that involve extended manufacturing operations. Continuous processing testing may apply alternative testing approaches for operations where discrete input-output relationships cannot be established on an event-by-event basis.

Methodology test methods and threshold parameters may be subject to continuous review and modification by one or more operators of CoT platform 100. One or more tests may be updated, removed, or supplemented based on regulatory changes, operational experience, and data quality requirements. The CoT platform 100 may maintain documentation of validation methodology changes to ensure transparency and consistency in data assessment processes. Methodology test methods and threshold parameters, in particular the methodologies for the validation checks for farm origin data and for physical flow traceability data in respect of cocoa and coffee and processed cocoa and coffee products, may be reviewed by an advisory and oversight committee comprising experts and representatives from across the coffee and cocoa industries.

Physical flow traceability data that fails tests may be designated as ineligible for use. Users may be permitted to correct data errors and re-upload corrected information to address testing failures in cases where data inconsistencies or upload errors are identified. The CoT platform 100 may provide detailed feedback regarding test failures to enable users to identify and address specific data quality issues.

Once one or more of the farm plot data, the lawful production and compliance risk data, and the physical flow traceability data is tested, it may be stored in one or more databases 116. The tested data may include one or more traceability trees generated from a supply chain process. A gateway server 118 may be coupled to the one or more databases 116. The gateway server 118 may be configured to query the one or more databases 116 and retrieve one or more of the tested farm plot data, the lawful production and compliance risk data, and the physical flow traceability data. In some examples, the gateway server 118 may be configured to process large amounts of data that may change rapidly. Gateway server 118 may also include a presentation tool for generating presentation packages.

Upon receiving the tested farm plot data, the lawful production and compliance risk data, and the physical flow traceability, the gateway server 118 may generate a presentation package suitable for presentation and interaction (e.g., on interactive GUI 120, via an API, etc.). The gateway server 118 may send the presentation package to the interactive GUI 120. In general, gateway server 118 may provide information based on the one or more of the tested farm plot data, the lawful production and compliance risk data, and the physical flow traceability data to the interactive GUI 120.

The presentation package may include any suitable data and/or information related to traceability and configured in a manner for presentation and/or user interaction, including, but not limited to, one or more of at least one chart, at least one watchlist, at least one alert, at least one grid application, at least one table, user input options and the like. In some examples, at least a portion of the data and/or information presented in the presentation package may be user-customizable. In some examples, the initial presentation package may include current data, historical (e.g., static data) and/or future (e.g., forecasted or predicted) data.

An application server 119 may communicate with the interactive GUI 120 and the gateway server 118. As described below, the interactive GUI 120 may receive user input that includes a request for any desired data. The interactive GUI 120 may send a request to the application server 119, which may then communicate with the gateway server 118. The application server 119 may then transmit desired data to the interactive GUI 120 for processing.

In an example, one or more of gateway server 118 and application server 119 may be connected to one or more backend servers. Although not shown, one or more of the gateway server 118 and application server 119 may include a controller (e.g., at least one processor, a microcontroller, processing device, etc.) and a non-transitory memory storing one or more routines and or algorithms for performing the functions of gateway server 118 and application server 119 described herein.

The interactive GUI 120 may be configured to generate and display one or more widgets / applications in one or more windows. These widgets / applications may include one or more CoT interfaces 122, which may have a uniquely configured arrangement of one or more input regions, one or more notification regions and one or more display regions. In some examples, one or more portions of the one or more CoT interfaces 122 may be automatically updated. In some examples, the display region(s) may include an interactive display that permits / prompts user input and may be automatically updated in response to user input.

In some examples, the one or more CoT interfaces 122 may include different configurations based on an underlying application and/or service (e.g., among one or more client applications / services 126) for which it is launched. For example, the one or more CoT interfaces 122 may have a first configuration for a mobile application, may have a second (different) configuration for a desktop application and may have a third (different) configuration for a spreadsheet application. In some examples, the one or more CoT interfaces 122 may include one or more windows with different configurations.

The one or more client applications / services 126 may be configured to create instances of application(s) and/or service(s) for distributing data to the one or more user devices 109. The one or more client applications / services 126 may include one or more of a desktop, a spreadsheet application, a mobile application (e.g., an application that may be suitable for a display screen of a mobile device such as a smartphone), and/or one or more APIs for receiving data in one or more object-oriented programming languages (e.g., Java, Python^{™}, R, etc.). In some examples, the one or more client applications / services 126 may create instance(s) of application(s) and/or service(s) including the interactive GUI 120. In some examples, the CoT system 102 may be configured to expose a presentation package to one or more API(s) among the one or more client applications / services 126.

In some examples, the CoT system 102 may include a client / server connection manager 128 (also referred to as connection manager 128) configured to manage client to server connection requests. In general, connection manager 128 may manage connection request(s) of the one or more user devices 109 to the CoT system 102 to access the one or more client applications / services 126.

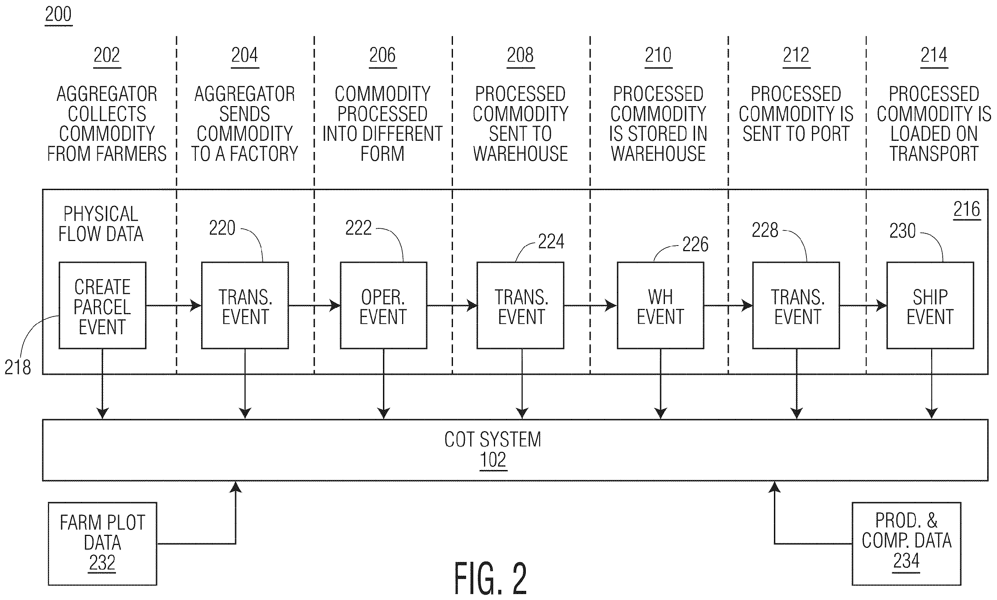

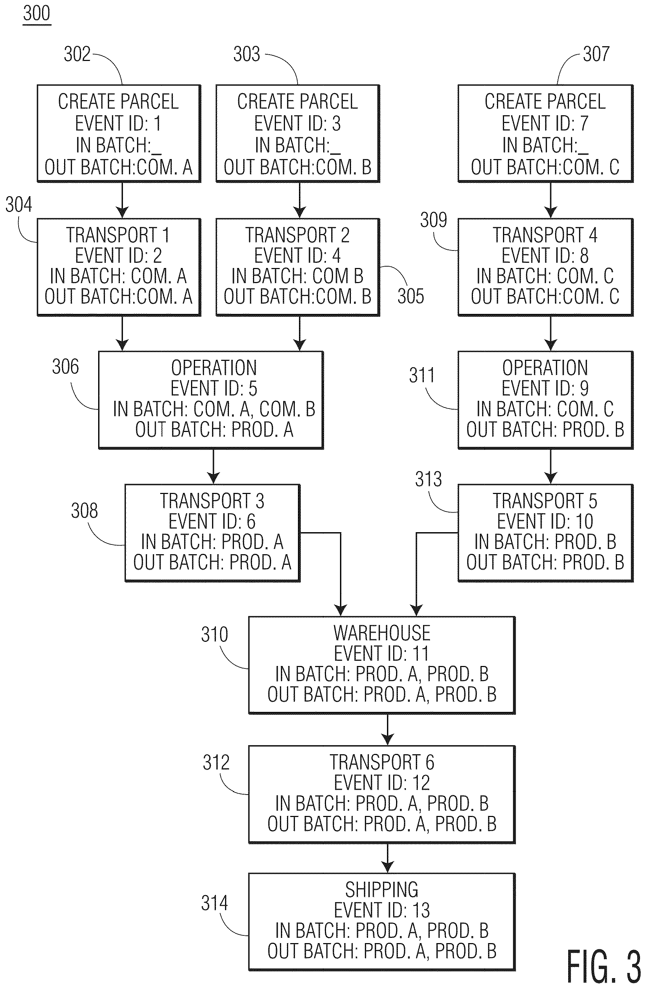

Referring now to FIGs. 2 and 3, a flowchart illustrating an example supply chain process 200 and a traceability tree 300 are shown. At step 202, an aggregator may collect a commodity (e.g., cocoa/coffee) from one or more farmers. A user may submit physical flow data 216 to the CoT system 102 in the form of a create parcel event 218. The create parcel event 218 may include one or more data fields including, but not limited to: an event date, a country, a creation type, an aggregator ID, aggregator document ID, crop year, output parcel (e.g., parcelID, net weight, harmonized system ("HS") code, product type), and (optionally) one or more farmer IDs. A parcel may only be permitted to cross-reference farms and aggregators that pass the relevant tests or reviews. Farms may be linked to aggregators through farmer IDs, and in the absence of one or more farmer IDs, it may be assumed that the parcel is linked to all farmers associated with the aggregator in the farm plot data.

The CoT system 102 may cross-reference the information contained in the create parcel event 218 (e.g., the parcelID, farmer ID, product ID, etc.) with farm plot data 232 validated through the farm plot data validation methodology described above. In addition, the CoT system 102 may cross-reference production and compliance data 234 associated with the aggregator, including one or more of the Physical Flow Traceability Disclosure Statement and the Lawful Production and Compliance Risk Disclosure Statement described above. If these cross-references confirm the create parcel event 218 is valid, the CoT system 102 may add a create parcel entry 302 (FIG. 3) to the traceability tree 300. The create parcel entry 302 may include one or more of a unique event ID and a parcelID of Commodity A.

At step 204, one of the operator or the aggregator may send the commodity to a factory for processing. A user may submit physical flow data 216 to the CoT system 102 in the form of a first transportation event 220. The first transportation event 220 may include one or more data fields, including, but not limited to: an event date, a country, a ParcelID (input/output), a net weight, and an evidence detail (e.g., depending on availability of an underlying document).

The CoT system 102 may review the information contained in the first transportation event 220 to confirm it is valid. For example, the CoT system 102 may cross-reference the information contained in the first transportation event 220 with the create parcel event 218 to confirm continuity. If the CoT system 102 confirms the first transportation event 220 is valid, it may add a first transportation entry 304 (Fig. 3) to the traceability tree 300. The first transportation entry 304 may include one or more of a unique event ID and a ParcelID. The input parcel's ParcelID may correspond to the ParcelID created in the output parcel of create parcel entry 302. The first transportation entry 304 may also include an OutputParcel including either the same or a new ParcelID, where this is required to indicate changes to the detail of the parcel (e.g., where the parcel has been reweighed and net weight has changed).

In some examples, the CoT system 102 may cross-reference any previous traceability trees stored in the one or more databases 116 that are associated with the one or more data fields of the first transportation event 220. For example, the CoT system 102 may use the previous traceability trees to generate one or more predicted characteristics of the first transportation event 220, such as, for example, a timing of the submission. If corresponding characteristics of the first transportation event 220 do not match the one or more predicted characteristics, the CoT system 102 may reject the first transportation event 220 and/or request additional information from the submitter.

At step 206, the factory may process the commodity into a different form. For example, coffee green beans may be cleaned, prepared, and/or roasted. A user may submit physical flow data 216 to the CoT system 102 in the form of an operation event 222. The operation event 222 may include one or more data fields, including, but not limited to: event date, country, facility ID, operation type, ParcelIDs (input/output), net weight, output HS code (if changed), and output product type (if changed). The CoT system 102 may review the information contained in the operation event 222 to confirm it is valid. For example, the CoT system 102 may cross-reference the information contained in operation event 222 with one or more of the first transportation event 220 and the create parcel event 218 to confirm continuity. In addition, the CoT system 102 may cross-reference production and compliance data 234 associated with the factory, including one or more of the Physical Flow Traceability Disclosure Statement, Exchange Warehouse Disclosure Statement and the Lawful Production and Compliance Risk Disclosure Statement described above. If the CoT system 102 confirms the operation event 222 is valid, it may add a first operation entry 306 (FIG. 3) to the traceability tree 300. The first operation entry 306 may include one or more of a unique event ID, an input ParcelID and output ParcelID.

In some examples, the CoT system 102 may cross-reference any previous traceability trees stored in the one or more databases 116 that are associated with the one or more data fields of the operation event 222. For example, the CoT system 102 may use the previous traceability trees to generate one or more predicted characteristics of the operation event 222, such as, for example, a timing of the submission. If corresponding characteristics of the operation event 222 do not match the one or more predicted characteristics, the CoT system 102 may reject the operation event 222 and/or request additional information from the submitter.

As shown in FIG. 3, the first operation entry 306 may incorporate a second Commodity B with a second create parcel entry 303 and a second transportation entry 305, each with their own unique event ID, input ParcelID, and output ParcelID corresponding to Commodity B. Accordingly, the input ParcelIDs for the first operation entry 306 may identify Commodity A and Commodity B. The output ParcelID may identify the combined Product A.

At step 208 (FIG. 2), the processed commodity may be sent to a warehouse. A user may submit physical flow data 216 to the CoT system 102 in the form of a second transportation event 224. The second transportation event 224 may include one or more data fields, including, but not limited to: an event date, a country, a ParcelID (input/output), a net weight, and an evidence detail (e.g., depending on availability of an underlying document). The CoT system 102 may review the information contained in the second transportation event 224 to confirm it is valid. For example, the CoT system 102 may cross-reference the information contained in the second transportation event 224 with one or more of the previous events in the traceability tree 300. If the CoT system 102 confirms the second transportation event 224 is valid, it may add a third transportation entry 308 (FIG. 3) to the traceability tree 300. The third transportation entry 308 may include a unique event ID, an input ParcelID and output ParcelID. The input ParcelID and output ParcelID of Product A may correspond to the output ParcelID of the first operation entry 306.

In some examples, the CoT system 102 may cross-reference any previous traceability trees stored in the one or more databases 116 that are associated with the one or more data fields of the second transportation event 224. For example, the CoT system 102 may use the previous traceability trees to generate one or more predicted characteristics of the second transportation event 224, such as, for example, a timing of the submission. If corresponding characteristics of the second transportation event 224 do not match the one or more predicted characteristics, the CoT system 102 may reject the second transportation event 224 and/or request additional information from the submitter.

At step 210, the processed commodity may be stored at the warehouse. A user may submit physical flow data 216 to the CoT system 102 in the form of a warehouse (WH) event 226. The warehouse event 226 may include one or more data fields, including, but not limited to: event date, country, facility ID, operation type, ParcelIDs (input/output), net weight, and evidence detail (depending on availability of underlying documentation). The CoT system 102 may review the information contained in the warehouse event 226 to confirm it is valid. For example, the CoT system 102 may cross-reference the information contained in the warehouse event 226 with one or more previous entries in the traceability tree 300. In addition, the CoT system 102 may cross-reference production and compliance data 234 associated with the warehouse, including one or more of the Physical Flow Traceability Disclosure Statement, Exchange Warehouse Disclosure Statement and the Lawful Production and Compliance Risk Disclosure Statement described above. If the CoT system 102 confirms the warehouse event 226 is valid, it may add a warehouse entry 310 (FIG. 3) to the traceability tree 300. The warehouse entry 310 may include a unique event ID, an input ParcelID and output ParcelID.

In some examples, the CoT system 102 may cross-reference any previous traceability trees stored in the one or more databases 116 that are associated with the one or more data fields of the warehouse event 226. For example, the CoT system 102 may use the previous traceability trees to generate one or more predicted characteristics of the warehouse event 226, such as, for example, a timing of the submission. If corresponding characteristics of the warehouse event 226 do not match the one or more predicted characteristics, the CoT system 102 may reject the second warehouse event 226 and/or request additional information from the submitter.

As shown in FIG. 3, the warehouse entry 310 may incorporate a second Product B with its own third create parcel entry 307, fourth transportation entry 309, second operation entry 311, and fifth transportation entry 313, each with their own unique event ID, input ParcelIDs, and output ParcelIDs corresponding to Commodity C and Product B. Accordingly, the input ParcelIDs and the output ParcelIDs for the warehouse entry 310 may identify Product A and Product B.

At step 212 (FIG. 2), the processed commodity may be sent to a port facility. A user may submit physical flow data 216 to the CoT system 102 in the form of a third transportation event 228. The third transportation event 228 may include one or more data fields, including, but not limited to: an event date, a country, a ParcelID (input/output), a net weight, and an evidence detail (e.g., depending on availability of an underlying document). The CoT system 102 may review the information contained in the third transportation event 228 to confirm it is valid. For example, the CoT system 102 may cross-reference the information contained in the third transportation event 228 with one or more of the previous events in the traceability tree 300. If the CoT system 102 confirms the third transportation event 228 is valid, it may add a sixth transportation entry 312 to the traceability tree 300. The sixth transportation entry 312 may include a unique event ID, input ParcelIDs and output ParcelIDs. The input ParcelIDs and output ParcelIDs may include Product A and Product B.

In some examples, the CoT system 102 may cross-reference any previous traceability trees stored in the one or more databases 116 that are associated with the one or more data fields of the third transportation event 228. For example, the CoT system 102 may use the previous traceability trees to generate one or more predicted characteristics of the third transportation event 228, such as, for example, a timing of the submission. If corresponding characteristics of the third transportation event 228 do not match the one or more predicted characteristics, the CoT system 102 may reject the third transportation event 228 and/or request additional information from the submitter.

At step 214, the processed commodity may be loaded on a transport and shipped. A user may submit physical flow data 216 to the CoT system 102 in the form of a shipping event 230. The shipping event 230 may include one or more data fields, including but not limited to: an event ID, an event date, a country, a ParcelID (input/output), a net weight, and an evidence detail (e.g., a bill of lading that includes one or more of a document ID, an origin country and port, a sender name and address, a vessel name, an HS code, a product type, and a gross weight).

The CoT system 102 may review the information contained in the shipping event 230 to confirm it is valid. For example, the CoT system 102 may cross-reference the information contained in the shipping event 230 with one or more of the previous events in the traceability tree 300. If the CoT system 102 confirms the shipping event 230 is valid, it may add a shipping entry 314 (FIG. 3) to the traceability tree 300. The shipping entry 314 may include a unique event ID, an input ParcelID and output ParcelID. The input ParcelID and output ParcelID may include Product A and Product B.

In some examples, the CoT system 102 may cross-reference any previous traceability trees stored in the one or more databases 116 that are associated with the one or more data fields of the shipping event 230. For example, the CoT system 102 may use the previous traceability trees to generate one or more predicted characteristics of the shipping event 230, such as, for example, a timing of the submission. If corresponding characteristics of the shipping event 230 do not match the one or more predicted characteristics, the CoT system 102 may reject the shipping event 230 and/or request additional information from the submitter.

One or more of the create parcel event 218, first transportation event 220, operation event 222, second transportation event 224, warehouse event 226, third transportation event 228, and shipping event 230 may be validated by the CoT system 102. For example, the event date in each cannot occur in the future and must be consistent with the sequence of event IDs within the traceability tree 300. Farmers must be in a correct country, the commodity must match the commodity specified in the farm data, and the farm must be within reasonable proximity to the aggregator. Farmers from which a ParcelID is sourced must have passed the validation tests for their farm plots. Users must be permissioned by virtue of having satisfied lawful production and risk protocol for that country. The country must match the country of the aggregator. The country must remain consistent throughout the events in the traceability tree 300. Each input parcel for an event must correspond to an output parcel of an earlier event. Users must pre-register aggregators for approval though the lawful production and risk protocol. The create parcel event must be approved for the relevant product type and origin country. Aggregators must satisfy a volume reasonability assessment and must have passed the Aggregator Systems Disclosure Statement and Lawful Production and Compliance Risk Disclosure Statement review process. A scan of the bill of lading may be required by CoT platform 100. Details submitted for the bill of lading record may need to match the scanned documents. The HS code, product type, and weights on the bill of lading record may need to match the input parcel within tolerances.

In some examples, a terminate parcel event may be used if an operator ever has a product recorded in the COT platform 100 that they no longer want to track (e.g., if it has actually been physically destroyed, is no longer usable, or has been sold to consumers). Once a parcel has been "terminated," no further events may be added and it may no longer be transferred.

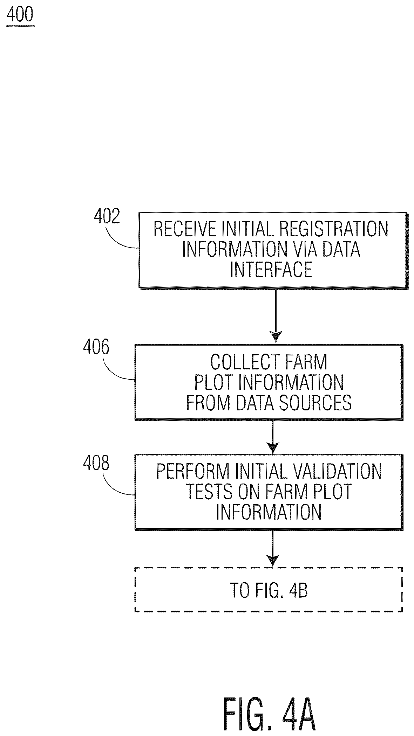

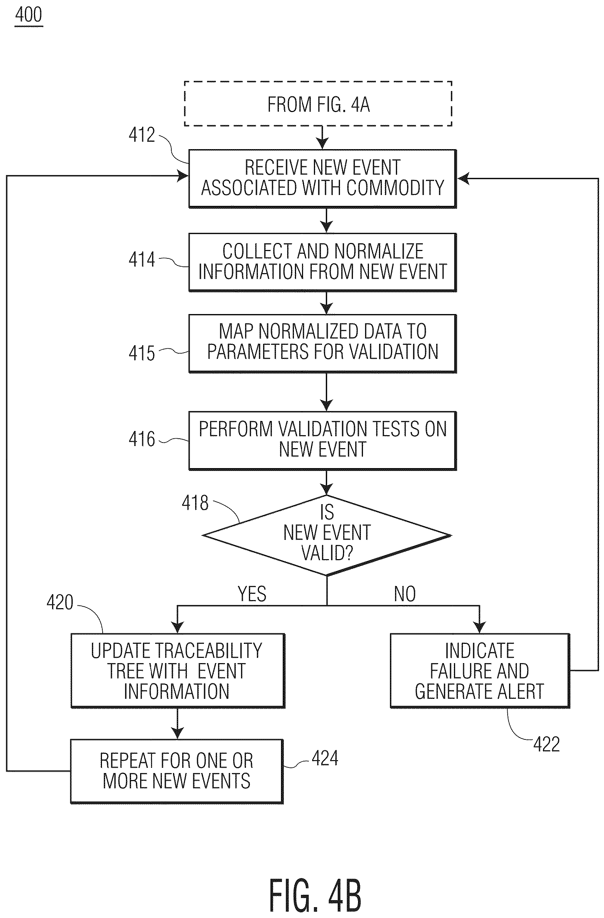

Referring now to FIGs. 4A and 4B, a flowchart illustrating a method 400 for traceability data validation in a commodity supply chain system performed by the CoT system 102 is shown.

At step 402, initial registration information from a user may be received.

At step 406, farm plot data associated with the product may be collected from the one or more farm plot data sources 104. The collected farm data may include parameters needed for validation, including geolocation coordinates, polygon boundary data, farmer identification, and plot size information.

At step 408, initial validation tests may be performed on the collected farm plot data by the data validator 114. (In some examples, the farm plot data may be initially passed through mapping module 132 prior to transmitting the farm plot data to data validator 114.) The initial validation tests may include (without being limited to) one or more of geometry validation tests, deforestation overlap tests, protected area overlap tests, and plot size reasonability tests. Once the farm plot data is validated by the data validator 114, it may be stored in the one or more databases 116 as part of the record along with a timestamp indicating when the information was received and a source identifier of the information source.

At step 412, a new event associated with the commodity may be received by the data interface 112. The new event may be associated with one or more of product identification data, commodity type, country of production, aggregator identification, crop year, and intended supply chain event data. In some examples, the event may be associated with the commodity based on (without being limited to) one or more of a parcel identifier, an aggregator identifier, or a facility identifier contained in incoming data.

A record may be created in the one or more databases 116. The record may include, at least, and without being limited to, product identifier information, event data, and a timestamp of receipt. The record may include a unique parcel identifier assigned to the commodity or product and may be used to establish a traceability tree configured to document the sequence of events and transformations affecting the commodity as it progresses through supply chain networks.

At step 414, the data interface 112 may collect information from the data source associated with the new event. The data interface 112 may normalize the collected information to a standardized format, filter the collected information to exclude null values or corrupted data.

At step 415, the mapping module 132 may map the normalized information to a set of parameters (e.g., a set of commodity-associated data) needed for testing.

At step 416, the data validator 114 may perform one or more validation tests (e.g., validation against one or more predefined methodologies) on the new event based on the set of commodity-associated data. In some examples, the validation tests may include testing based on one or more of comparison with past events stored in a traceability tree and/or predicted event characteristics. In some examples, the validation tests may include (without being limited to) time sequence consistency tests, product type consistency tests, and input-output weight consistency tests.

At step 418, the data validator 114 may determine whether the new event is valid based on the validation test(s). If the new event is valid, the method proceeds to step 420. If the new event is not valid or information is missing, the method proceeds to step 422 in which one or more alerts are generated. The one or more alerts may include an alert for display via the interactive GUI 120 of the submitter and/or one or more supply chain participants. The one or more alerts may prompt the submitter and/or one or more supply chain participants to submit additional information via the graphical user interface or via the data interface 112. The one or more alerts from a submission may be gathered into a report listing alerts for that submission which may be delayed and/or downloaded.

At step 420, a traceability tree stored in the one or more databases 116 may be updated with the tested event information. The traceability tree may be updated with a new entry linking the new event to previous events based on input and output parcel identifiers. The CoT system 102 may update the interactive GUI 120 to display the updated traceability tree and validation testing status.

At step 424, the method may return to step 412 for any new events.

In some examples, the CoT system 102 may update the interactive GUI 120 to display the traceability tree. In some examples, the CoT system 102 may utilize one or more identifiers associated with product and/or traceability in order to search database(s) 116 for information associated with the product and/or events associated with the product (e.g., via a query request implemented via interactive GUI 120). In some examples, the CoT system 102 may utilize one or more identifiers associated with the product and/or events associated with the product to search database(s) 116 and produce the traceability tree.

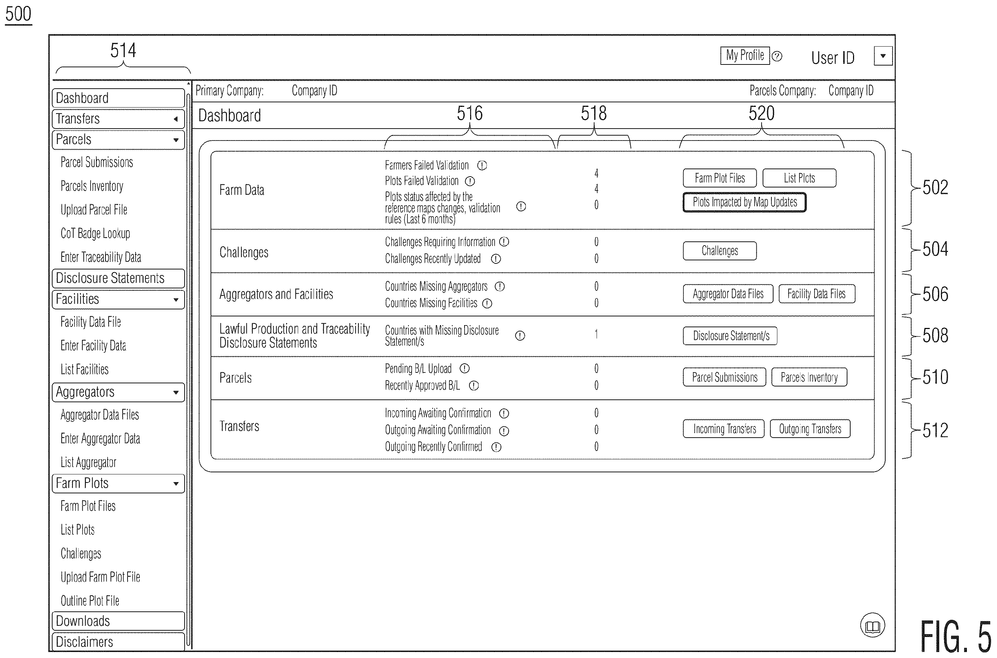

Referring now to FIG. 5, a screenshot of an example of the one or more CoT interfaces 122, namely a CoT dashboard 500 is shown, according to an aspect of the present disclosure. A navigation pane 514 may allow users to navigate between the one or more CoT interfaces 122.

The CoT dashboard 500 may provide a farm plot data overview region 502, a challenges overview region 504, an aggregators and facilities overview region 506, a Lawful Production and Traceability Disclosure Statement overview region 508, a parcels overview region 510, and a transfers overview region 512. Each of these regions may include one or more categories 516. Each of the one or more categories 516 may also have a corresponding indicator 518 of any potential issues. In an example, a user may want each indicator 518 to read "0," thereby indicating no potential issues. Each of the regions may also include one or more buttons 520 that allow the user to navigate to an indicated one or more CoT interfaces 122, for example, to remedy any indicated issues.

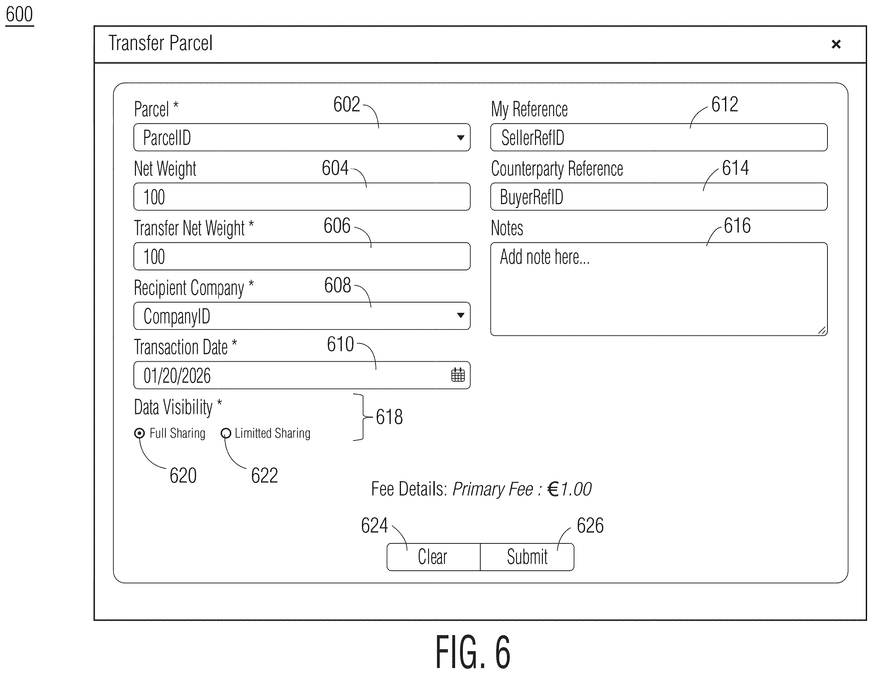

Referring now to FIG. 6, a screenshot of another example of the one or more CoT interfaces 122, namely a transfer parcel window 600 is shown, according to an aspect of the present disclosure. When a parcel is sold (e.g., from a seller to a buyer), control of the parcel and the data associated with that parcel may be transferred to the buying company. The transfer parcel window 600 may include one or more fields configured to receive user input (e.g., via text input and/or selection via a dropdown menu), such as for example, a parcel field 602, a net weight field 604, a transfer net weight field 606, a recipient company field 608, a transaction date field 610, a my reference field 612, a counterparty reference field 614, and a notes field 616. The user may be able to toggle a data visibility section 618 between an action button for full sharing 620 and an action button for limited sharing 622. A clear button 624 may reset all fields. A submit button 626 may allow the user to submit the transfer.

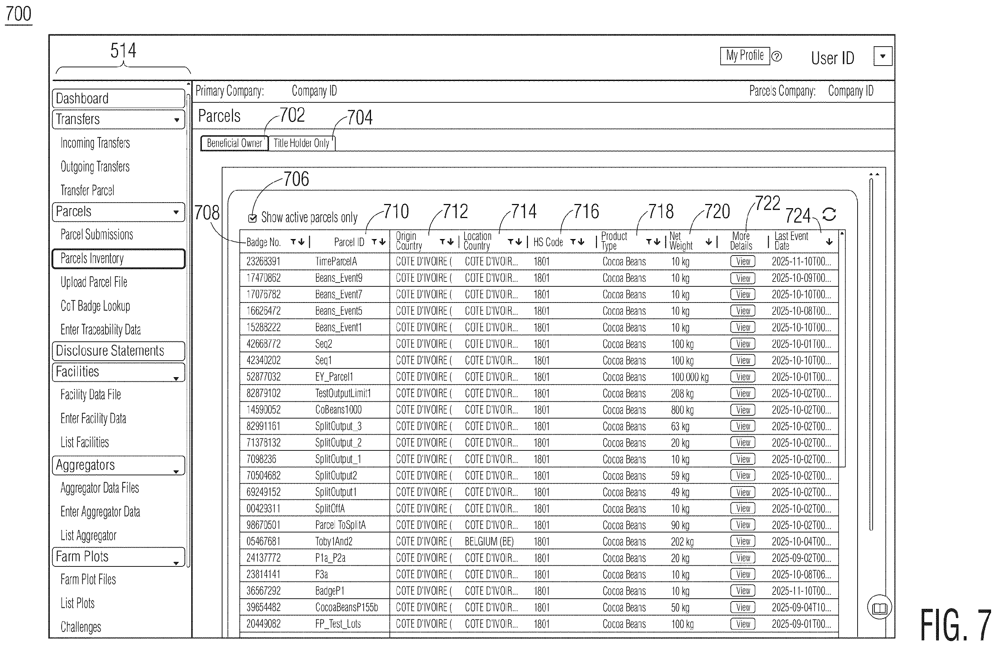

Referring now to FIG. 7, a screenshot of another example of the one or more CoT interfaces 122, namely a parcels inventory window 700 is shown, according to an aspect of the present disclosure. The parcels inventory window 700 may allow a user to navigate between a beneficial owner tab 702 and a title holder only tab 704. The parcels inventory window 700 may also allow a user to selected a dynamic button 706 to show active parcels only. The parcels inventory window 700 may include a table with one or more filterable and sortable columns, such as badge number 708, ParcelID 710, origin country 712, location country 714, HS code 716, product type 718, net weight 720, more details 722 with a selectable button to show more information, and last event date 724.

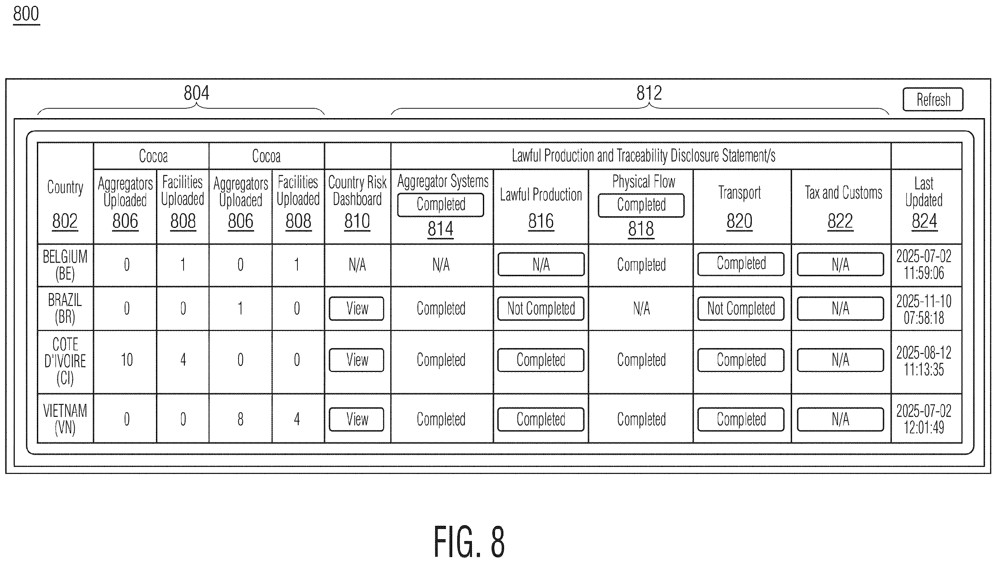

Referring now to FIG. 8, a screenshot of another example of the one or more CoT interfaces 122, namely a Lawful Production and Traceability Disclosure Statements window 800 is shown, according to an aspect of the present disclosure. The Lawful Production and Traceability Disclosure Statements window 800 may include a country column 802 and one or more commodities sections 804. Each of the one or more commodities sections 804 may include an aggregators uploaded column 806 and a facilities uploaded column 808. The Lawful Production and Traceability Disclosure Statements window 800 may also include a country risk dashboard column 810 with a button that allows the user to view the country risk dashboard if available. A Lawful Production and Traceability Disclosure Statements region 812 may include one or more columns, such as an aggregator systems column 814, a lawful production column 816, a physical flow column 818, a transport column 820, and a tax and customs column 822. Each item in these columns may include an indication of whether or not the item is complete. The Lawful Production and Traceability Disclosure Statements window 800 may also include a last updated column 824.

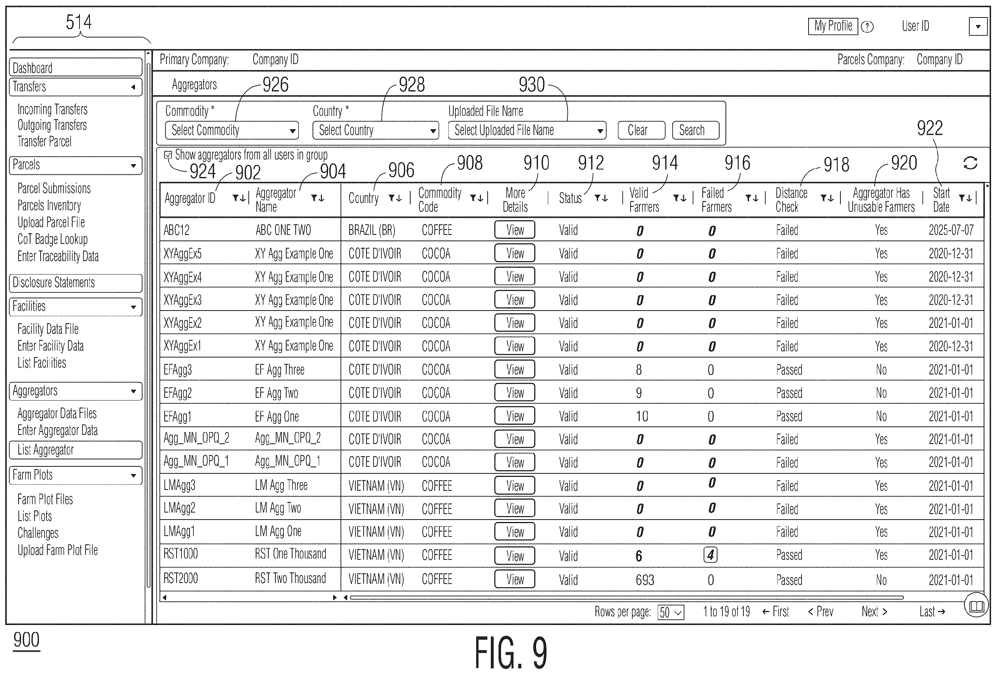

Referring now to FIG. 9, a screenshot of another example of the one or more CoT interfaces 122, namely an aggregators window 900 is shown, according to an aspect of the present disclosure. The aggregators window 900 may provide details of the aggregators that have been uploaded and whether they have passed all tests and validations. The aggregators window 900 may include one or more columns (e.g., filterable and/or sortable), such as an aggregator ID 902, an aggregator name 904, a country 906, a commodity code 908, more details 910, status 912, valid farmers 914, failed farmers 916, distance check 918, unusable farmers 920, and a start date 922. The aggregators window 900 may allow users to view all aggregators from all users in a group via a selectable toggle button 924. The aggregators window 900 may allow users to search via one or more fields configure to received user input, such as a commodity field 926, a country field 928, and a file name field 930.

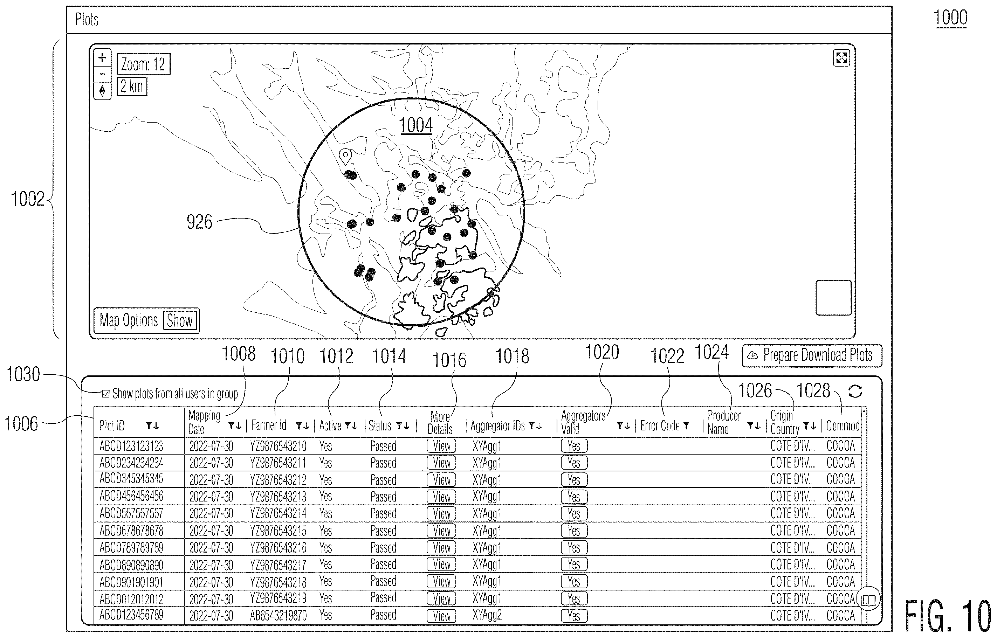

Referring now to FIG. 10, a screenshot of another example of the one or more CoT interfaces 122, namely a view plots window 1000 is shown, according to an aspect of the present disclosure. The view plots window 1000 may include a map interface 1002 with one or more indicators 1004 showing farm plots. The view plots window 1000 may also include one or columns (e.g., filterable and/or sortable), such as plotID 1006, mapping date 1008, farmerID 1010, active 1012, status 1014, more details 1016, aggregatorIDs 1018, aggregators valid 1020, error code 1022, producer name 1024, origin country 1026, and commodity 1028. The view plots window 1000 may allow users to view all plots from all users in a group via a selectable toggle button 1030. The map interface 1002 may include the option to display different map layers. The map interface 1002 may also include the option to display different map views, such as switching between reference maps and satellite imagery; zoom in or out of the map; and make the map full screen.

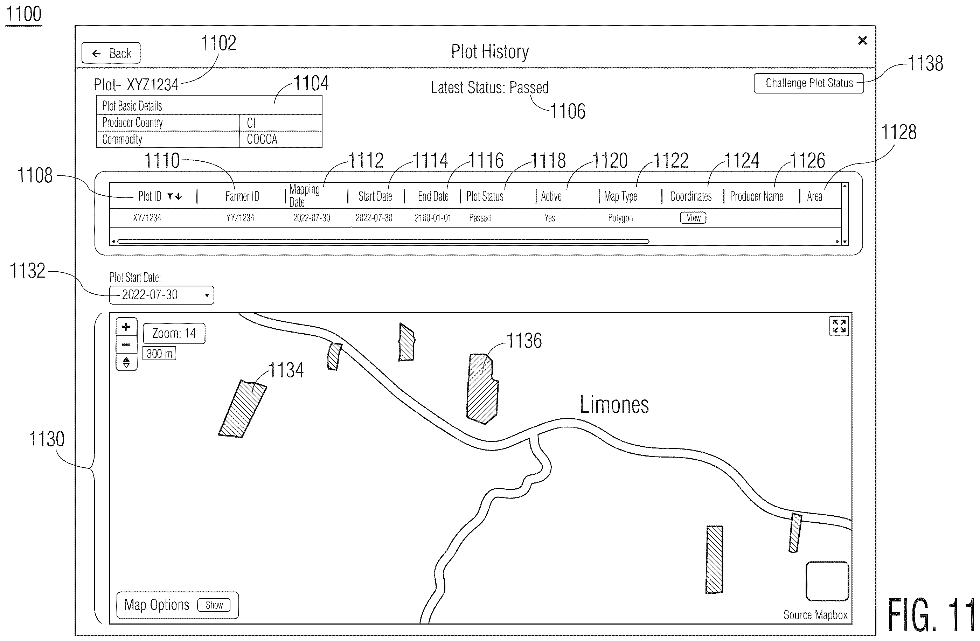

Referring now to FIG. 11, a screenshot of another example of the one or more CoT interfaces 122, namely a plot detail window 1100 is shown, according to an aspect of the present disclosure. The plot detail window 1100 may include information for a specific plot, identified by a plotID 1102. The plot detail window 1100 may include basic plot details 1104 and a latest status 1106. The plot detail window 1100 may include one or more columns (e.g., filterable and/or sortable) such as plotID 1108, farmerID 1110, mapping date 1112, start date 1114, end date 1116, plot status 1118, active 1120, map type 1122, coordinates 1124, producer name 1126, and area 1128. The plot detail window 1100 may include a map interface 1130. A drop down menu 1132 may allow the user to select a map for display in the map interface 1130 via a plot start date. The map interface 1130 may display one or more polygons. For example, a polygon of a first color 1134 (e.g., green) may indicate an area has passed testing and a polygon of a second color 1136 (e.g., red) may indicate an area has failed testing. The plot detail window 1100 may include a button 1138 that allows users to challenge plot status. The map interface 1130 may include the option to display different map layers. The map interface 1130 may also include the option to display different map views, such as switching between reference maps and satellite imagery; zoom in or out of the map; and make the map full screen.

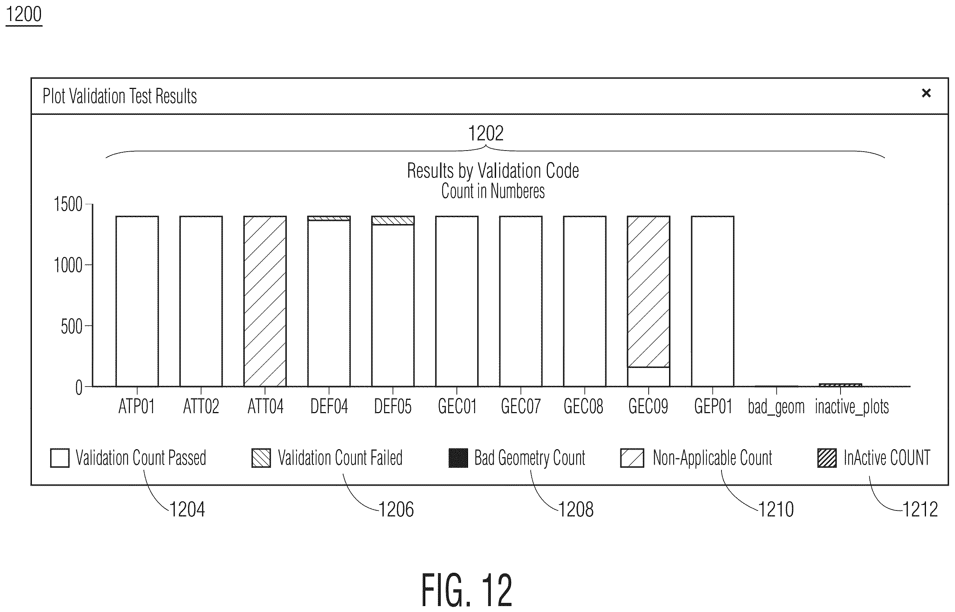

Referring now to FIG. 12, a screenshot of another example of the one or more CoT interfaces 122, namely a validation test summary window 1200 is shown, according to an aspect of the present disclosure. The validation test summary window 1200 may include a plurality of bar graphs 1202 that show results by individual validation codes. The y-axis may be count in numbers. Each bar graph of the plurality of bar graphs 1202 may include selectable categories for display, such as validation count passed 1204, validation count failed 1206, bad geometry count 1208, non-applicable count 1210, and inactive count 1212. Each of the categories may have a respective color for display.

The CoT system 102 may be configured to provide risk assessment and mitigation tools through a comprehensive risk assessment dashboard. The risk assessment dashboard may present information relating to specified risk criteria and may identify how the CoT platform 100 can support users in conducting risk assessments regarding commodities and products within their supply chains.

The risk assessment dashboard may integrate multiple categories of risk-related information to provide users with supporting data for evaluating potential risks associated with their commodity supply chains. The dashboard may present information in a structured format that enables users to demonstrate an assessment of risks and that appropriate mitigation measures based on identified risk factors have been implemented.

In some examples, the risk assessment dashboard may incorporate European Commission production country risk classifications. These risk classifications may provide official assessments of deforestation and risks associated with different countries of production. The European Commission risk assignments may categorize countries as low risk, standard risk, or high risk based on factors such as deforestation rates, governance quality, and regulatory enforcement capabilities. Users may utilize these risk classifications to support demonstrations of risk assessments associated with commodities sourced from different countries and appropriate due diligence measures for their supply chain operations.

Conclusions from European Commission assessments may be included in the risk assessment dashboard to provide additional context and analysis regarding country-specific risk ratings. These conclusions may offer insights into the factors contributing to country risk classifications and may provide guidance on risk mitigation approaches for different production regions.

In some examples, the risk assessment dashboard may present data regarding the presence of forest and prevalence of deforestation in countries of production. Forest presence data may include information from third-party mapping services and EU Observatory mapping systems that document current forest cover and forest distribution patterns. This forest data may support demonstration of users' assessments of the forest context surrounding their supply chain operations, forest proximity and deforestation pressure.

Deforestation prevalence data may provide information about historical and ongoing forest conversion activities within production countries. This deforestation information may include temporal data showing deforestation trends over time, spatial data indicating areas of high deforestation activity, and quantitative measures of deforestation rates. Users may utilize deforestation prevalence data to support a demonstration of risk assessments related to the likelihood that their supply chains may be affected by forest conversion activities and the implementation of appropriate monitoring measures.

In some examples, the risk assessment dashboard may incorporate public resources information regarding governance and regulatory quality indicators for production countries. Corruption perceptions data may support demonstrations of assessments of corruption levels and transparency in different countries, and risks related to regulatory compliance and enforcement effectiveness. Regulatory quality indicators may support demonstrations of assessments of the effectiveness of government institutions, rule of law implementation, and regulatory framework stability in production countries.

In some examples, rule of law data may be included in the risk assessment dashboard to provide information about legal system effectiveness, judicial independence, and enforcement capabilities in different countries. This rule of law information may support demonstrations of assessments of the reliability of legal compliance systems and the effectiveness of regulatory oversight in their supply chain regions.

In some examples, human rights information may be included in the risk assessment dashboard to provide data about human rights conditions and protections in production countries. Human rights data may include data relating to labor rights, indigenous peoples' rights, community rights, and other human rights factors that may affect supply chain compliance. Users may utilize human rights information to support demonstrations of assessments of potential risks related to labor practices, community impacts, and social compliance issues within their supply chains.

In some examples, conflicts and sanctions data may be included in the risk assessment dashboard to provide information about political instability, armed conflicts, and international sanctions that may affect production countries. This information may enable users to support demonstrations of assessments of risks related to supply chain disruption, regulatory compliance complications, and reputational risks associated with operations in affected regions.

In some examples, the risk assessment dashboard may include specialized data regarding risks associated with infringing the rights of indigenous peoples within supply chain operations. Indigenous peoples risk data may provide information about indigenous territories, traditional land use areas, and indigenous rights recognition in different production regions. This information may enable users to support demonstrations of assessments of potential risks related to indigenous peoples' rights and to implement appropriate consultation and consent processes.

Indigenous peoples risk assessments may include information about free, prior, and informed consent requirements, traditional territory boundaries, and indigenous community presence in production areas. Users may utilize this information to support demonstrations of assessments of risks associated with their supply chain operations in the context of indigenous peoples' rights and traditional land use practices.

In some examples, the risk assessment dashboard may present information about data requirements, validation methodologies, and review protocols to support users in demonstrating compliance with regulatory risk assessment requirements. The risk assessment dashboard may support demonstrations of how farm plot data validation, physical flow traceability testing, and lawful production compliance assessments contribute to overall risk assessment processes.

In some examples, the risk assessment dashboard may provide guidance on how users can utilize validation results and compliance assessments to demonstrate that they have conducted appropriate risk assessments and implemented adequate risk mitigation measures. The risk assessment dashboard may present information about how different validation outcomes and compliance indicators can be used to support regulatory reporting requirements and due diligence documentation.

Support for demonstrating risk mitigation may also be provided through the risk assessment dashboard. The CoT platform 100 may present information about identifying and confirming the existence of implemented mitigation measures.

In some examples, the risk assessment dashboard may be updated regularly to incorporate new risk information, regulatory changes, and evolving risk assessment and mitigation methodologies. The CoT platform 100 may maintain current risk data through regulatory updates, and ongoing monitoring of risk factors affecting commodity supply chains.

In some examples, search and navigation interfaces may enable users to locate and access specific parcels, farm plots, or supply chain participants. Search functionality may support filtering by various criteria including commodity types, production countries, time periods, and compliance status indicators. Navigation interfaces may provide hierarchical access to related information and enable users to explore traceability relationships between different data elements.

The CoT system 102 may implement application programming interface systems that enable automated data exchange and integration with external software systems. Application programming interfaces may provide programmatic access to platform functions, enabling supply chain participants to integrate platform capabilities with their existing enterprise resource planning systems, supply chain management software, and other business applications.

Application programming interface endpoints may support data upload operations that enable automated submission of traceability data, farm plot information, and compliance documentation from external systems. These programmatic interfaces may utilize standardized data formats and communication protocols to facilitate reliable data exchange between different software platforms.

Data retrieval application programming interfaces may enable authorized users to access platform data programmatically for integration with their internal systems and reporting processes. These interfaces may provide structured access to validation results and traceability information while maintaining appropriate access controls and data security measures.

The CoT system 102 may implement selective data sharing capabilities that enable controlled information dissemination while maintaining confidentiality of sensitive commercial information. These selective sharing features may provide different levels of data access based on user relationships, transaction contexts, and data sensitivity classifications.

In some examples, farm plot data sharing controls may enable selective disclosure of geographic and production information to authorized supply chain participants. Geometry information including plot polygons and geolocation points may be configured for automatic sharing with buyers until due diligence statement creation processes are completed. After due diligence statement creation, geometry information sharing may become optional based on seller preferences. Other farm plot data elements may be subject to seller-controlled sharing options that enable data owners to determine which information is disclosed to buyers and other supply chain participants.

In some examples, physical flow traceability data sharing may implement tiered access controls that provide different levels of information visibility to different supply chain participants. Details regarding immediate sellers may be configured for automatic sharing with buyers to support direct transaction relationships. Bill of lading information may be shared with buyers until due diligence statement creation processes are completed, after which such sharing may become optional based on seller preferences.

Comprehensive physical flow traceability data including complete supply chain histories, processing details, and facility information may be subject to seller-controlled sharing options. Sellers may choose to make detailed traceability information visible to buyers when such disclosure supports business relationships or compliance requirements, while maintaining the option to restrict access to sensitive supply chain information.

In some examples, the CoT system 102 may implement role-based access control systems that determine user permissions and data access rights based on user classifications and supply chain relationships. Primary data uploaders may have access to comprehensive data management functions including farm plot data upload, aggregator information management, and supply chain data submission capabilities. Secondary data uploaders may have access to traceability and supply chain data functions without farm plot or aggregator data management capabilities.

Buyer access permissions may be configured to provide appropriate visibility into commodity information for parcels related to consignments they are purchasing or considering for purchase. Buyer interfaces (e.g., among the one or more CoT interfaces 122) may display relevant information, validation results, and traceability summaries while maintaining confidentiality of sensitive supplier information that is not necessary for buyer decision-making processes.

Seller access controls may enable data owners to manage information sharing preferences and control the visibility of their supply chain information to different buyers and supply chain participants. Seller interfaces (e.g., among the one or more CoT interfaces 122) may provide options for configuring data sharing settings, managing buyer access permissions, and controlling the disclosure of sensitive commercial information.

In some examples, the CoT system 102 may implement audit trail and access logging capabilities that maintain records of data access activities and information sharing events. Access logs may document which users accessed specific information, when access occurred, and what information was viewed or downloaded. These audit capabilities may support testing, security monitoring, and dispute resolution processes.

In some examples, data export and reporting interfaces may enable users to generate customized reports and data extracts based on their access permissions and business requirements. Export functionality may support various file formats and may enable users to create reports, traceability summaries, and other documentation required for regulatory reporting or business operations.

In some examples, CoT system 102 may be configured for real-time notification, and may provide users with updates about validation process completion, status changes, and other events affecting their commodity consignments. Notification delivery may be configured through multiple channels including (without being limited to) email alerts and dashboard notifications.

In some examples, the CoT system 102 may implement data visualization tools that enable users to explore traceability relationships through interactive maps, traceability trees, network diagrams, and other visual representations. Geographic visualization capabilities (e.g., via interactive GUI 120) may display farm plot locations, supply chain routes, and facility locations while maintaining appropriate confidentiality controls for sensitive location information.

In some examples, the CoT platform 100 may include integration capabilities, thus enabling the CoT platform 100 to connect with external regulatory reporting systems and compliance databases. These integration features may facilitate the preparation and submission of due diligence statements, regulatory filings, and other compliance documentation required by applicable regulations and government systems.

In some examples, the CoT system 102 may implement comprehensive third-party inspection and testing programs designed to support and validate the data collection and validation methodology processes described above. These inspection and testing programs may utilize risk-based selection criteria combined with random sampling approaches to ensure systematic assessment of data quality across the operations of CoT platform 100. These inspection and testing programs may also utilize other information that indicates a need or desire to inspect and test data on an ad hoc or emergency basis outside of the normal inspection and testing cycle.

The third-party inspection and testing programs may be conducted by independent organizations that are separate from the operators of CoT platform 100 and supply chain participants. These independent testing services may provide objective assessment capabilities that enhance the credibility and reliability of the validation processes of CoT platform 100. The use of independent third parties may help ensure that inspection and testing activities are conducted without conflicts of interest that could compromise the integrity of assessment results.

In some examples, the CoT system 102 may be configured to implement risk-based selection methodologies to identify (without being limited to) parcels, aggregators, farmers, facilities, and transport events that warrant detailed inspection and testing activities. The risk-based approach may consider multiple factors including country risk classifications, commodity types, supply chain complexity, validation test results, and historical compliance performance. High-risk supply chain elements may be subject to more frequent and intensive inspection activities, while lower-risk elements may be subject to periodic sampling-based assessments.

In some examples, random selection components may be incorporated into the inspection program of CoT platform 100 to ensure that testing activities are not limited to obviously problematic cases. Random sampling may help identify systemic issues that might not be apparent through risk-based or ad hoc selection alone and may provide broader coverage of operations of CoT platform 100. The combination of risk-based or ad hoc and random selection approaches may enable the inspection program to achieve comprehensive coverage while focusing resources on areas of greatest concern.

In some examples, the inspection and testing programs may encompass multiple categories of assessment activities designed to evaluate different aspects of platform data and systems. Desk-based inspection processes may involve detailed review of documentation, data analysis, and remote testing activities that can be conducted without physical site visits. Field-based inspection processes may involve on-site visits to farms, processing facilities, warehouses, and other physical systems and locations within supply chain networks.

Desk-based inspection activities may include comprehensive review of uploaded data for consistency, completeness, and accuracy. Document testing processes may assess the authenticity and validity of supporting documentation including contracts, certificates, audit reports, and other materials referenced in platform submissions. Data analysis activities may identify patterns, anomalies, and inconsistencies that may indicate data quality issues.

Cross-referencing testing may be conducted to compare stored data with external databases, satellite imagery, government records, and other independent information sources. These cross-referencing activities may help confirm the accuracy of submitted information and identify discrepancies that warrant further investigation. Temporal analysis may assess changes in data over time to identify inconsistencies or suspicious patterns that may indicate data manipulation.

Field-based inspection activities may involve physical visits to production locations, processing facilities, and other supply chain sites to verify the accuracy of submitted information. Farm plot inspections may include GPS confirmation of plot boundaries, assessment of agricultural activities, confirmation of farmer identities, and evaluation of production practices. These on-site assessments may provide direct testing of internal management and traceability systems and of farm plot data accuracy and may identify discrepancies between submitted information and actual conditions.

In some examples, the CoT platform 100 may implement a comprehensive membership process designed to control access to platform functions and ensure that users meet appropriate qualifications for their intended activities within the commodity traceability system. The membership process may establish different categories of user access that correspond to the various roles and responsibilities of supply chain participants who utilize the CoT platform 100 for traceability purposes.

In a non-limiting example, the CoT platform 100 may support three distinct categories of user membership that provide different levels of access to platform functions and data management capabilities. Each membership category may be designed to accommodate the specific needs and responsibilities of different types of supply chain participants while maintaining appropriate security and controls.

Primary data uploader membership may be designed for users who require comprehensive access to platform functions including the ability to upload and manage foundational data elements within the system. Primary data uploaders may be granted access to farm plot data upload capabilities, enabling them to submit geolocation information and agricultural production data for farm plots within their supply chain networks. Primary data uploader access may also include aggregator data management functions that enable users to submit and maintain information about supply chain aggregators and their operational characteristics.

Primary data uploaders may be authorized to upload supply chain data including physical flow traceability information, processing records, and transportation documentation. This comprehensive access level may enable primary data uploaders to establish complete traceability trees within the CoT platform 100 and to manage the foundational data elements for supply chain operations.

Secondary data uploader membership may be designed for users who require access to traceability and supply chain data functions without the need for farm plot or aggregator data management capabilities. Secondary data uploaders may be granted access to upload traceability information for commodities and products previously established by primary data uploaders. This membership category may enable supply chain participants to contribute traceability information for their specific supply chain activities while relying on other participants to provide foundational production and aggregator data.

Secondary data uploader access may include capabilities for uploading processing records, transportation information, warehousing data, and other supply chain documentation that tracks commodity movement and transformation activities. Secondary data uploaders may be able to create and manage product parcels within existing traceability trees but may not be authorized to establish new farm plot or aggregator records within the platform.

Clearing member membership may be designed specifically for users who require access to platform functions for commodity delivery activities related to exchange-traded and cleared contracts. Clearing members may be granted access to platform functions that support the delivery and transfer of commodities pursuant to standardized contract specifications and clearing procedures. This membership category may provide specialized access capabilities that enable clearing members to utilize the CoT platform 100 for contract fulfillment activities without requiring comprehensive data upload or management functions. In some examples, the CoT platform 100 may interact with exchange delivery systems to automatically track the ownership of commodities involved in cleared contract deliveries. For example, the CoT platform 100 may interact with exchange delivery systems to change the owner of a parcel in the CoT platform 100 each time an exchange delivery system records a change in owner of the commodities involved in the exchange delivery.

Clearing member access may be limited to functions that support commodity delivery and transfer processes related to exchange-traded and cleared contracts. These users may not be authorized to upload farm plot data, aggregator information, or comprehensive traceability data, but may be able to access relevant information and validation results for commodities involved in cleared contract deliveries.

The membership application process may implement different requirements and procedures for each membership category based on the access levels and responsibilities associated with each category. Application requirements may be designed to ensure that users possess appropriate qualifications and capabilities for their intended platform activities while maintaining security standards.

Primary data uploader applications may require comprehensive information about the applicant organization including corporate ownership structures, business integrity documentation, and operational capabilities. Primary data uploader applicants may be required to demonstrate their ability to collect and manage farm plot data, aggregator information, and comprehensive supply chain documentation. The application process for primary data uploaders may include detailed review of the applicant's supply chain operations, data management systems, and compliance capabilities.

Secondary data uploader applications may require information about the applicant's supply chain activities and data management capabilities without the comprehensive corporate documentation required for primary data uploaders. Secondary data uploader applicants may be required to demonstrate their ability to collect and submit accurate traceability information for their specific supply chain activities.

Clearing member applications may focus on the applicant's clearing and delivery capabilities rather than comprehensive supply chain data management functions. In some examples, Clearing member applicants may need to demonstrate their participation in relevant clearing systems and their ability to fulfill commodity delivery obligations under standardized contract terms.

In some examples, each membership category may require applicants to complete standardized application forms that collect relevant information about the applicant organization and its intended platform usage. Application forms may include questions about (for example) corporate structure, business activities, supply chain operations, and technical capabilities relevant to the specific membership category being requested.

In some examples, applicant organizations may need to identify any affiliate entities that intend to utilize platform access through the membership application. Affiliate identification requirements may ensure that all entities with platform access are properly documented and that appropriate access controls are maintained across related organizations.

In some examples, the membership application process may implement know your customer ("KYC") screening procedures for all applicant categories. KYC screening may include an analysis of (without being limited to) corporate identity, assessment of business legitimacy, evaluation of compliance history, and review of any regulatory or legal issues that may affect the applicant's suitability for platform membership. KYC procedures may help ensure that platform access is granted to legitimate business entities that meet appropriate standards for participation in regulated commodity supply chains.

In some examples, approved members may be required to execute user agreements and agree to comply with usage rules that establish the terms and conditions for platform access and usage. User agreements and usage rules may include provisions regarding (without being limited to) data accuracy requirements, compliance obligations, confidentiality protections, and acceptable use policies. The user agreement execution process may include confirmation by users that the data they upload to the CoT platform 100 is true, accurate, and complete.

User agreements and usage rules may establish ongoing obligations for platform members including requirements (for example) to maintain current information, comply with platform policies and procedures, and cooperate with inspection activities. The agreements and rules may also establish procedures for membership termination, data retention, and dispute resolution.

In some examples, membership decisions may be subject to ongoing review and monitoring to ensure that approved members continue to meet platform requirements and maintain appropriate standards. Continued membership may be contingent upon compliance with user agreement terms, platform usage rules, and applicable regulatory requirements.

In some examples, the CoT platform 100 may implement comprehensive surveillance procedures designed to monitor input data quality and user behavior patterns across all operations. These surveillance procedures may provide systematic oversight capabilities that enable the identification of anomalies, suspicious activities, and data quality issues that could affect the integrity and reliability of the commodity traceability system.

Automated testing systems may be integrated into the surveillance procedures to provide continuous monitoring of data submissions and user activities. These automated tests may analyze incoming data to identify patterns, inconsistencies, and anomalies that may indicate data quality problems or potentially suspicious behavior. The automated testing capabilities may operate continuously without human intervention, enabling comprehensive coverage of platform activities while maintaining operational efficiency.

In some examples, data pattern analysis algorithms may be implemented to identify unusual patterns in one or more of farm plot submissions, physical flow traceability data, and disclosure statement responses. These pattern analysis systems may establish baseline patterns for normal data submissions and may flag deviations from expected patterns that could indicate data manipulation, systematic errors, or fraudulent activities. Pattern analysis may consider factors such as submission timing, data volume, geographic distributions, and consistency with historical patterns.

In some examples, CoT platform 100 may include an anomaly detection system configured to identify outliers and unusual data points within submitted information. These anomaly detection capabilities may analyze quantitative data such as farm plot sizes, commodity volumes, processing yields, and transportation distances to identify values that fall outside expected ranges or that are inconsistent with typical supply chain parameters. Anomaly detection may help identify data entry errors, unrealistic claims, or potentially fraudulent submissions.

In some examples, user behavior monitoring systems may track user interaction patterns with the CoT platform 100 to identify suspicious activities or unusual usage patterns. Behavior monitoring may analyze factors such as login patterns, data submission frequencies, access patterns, and interaction sequences to identify behaviors that deviate from normal user activities. Unusual behavior patterns may indicate compromised accounts, coordinated fraudulent activities, or systematic attempts to manipulate platform data.

In some examples, geographic consistency monitoring may be implemented by CoT platform 100 to assess the spatial relationships between farm plots, aggregators, facilities, and transportation routes to identify implausible geographic configurations. Geographic monitoring systems may utilize spatial analysis algorithms to evaluate distances, transportation feasibility, and regional consistency of supply chain networks. Geographic anomalies may indicate data errors, fraudulent location claims, or logistically implausible supply chain configurations.

In some examples, temporal consistency analysis may be implemented by CoT platform to monitor the timing and sequencing of data submissions and supply chain events in order to identify inconsistencies or suspicious patterns. Temporal analysis may evaluate factors such as submission timing relative to harvest seasons, processing schedules, and transportation timeframes to identify submissions that are inconsistent with expected agricultural and supply chain cycles. Temporal anomalies may indicate backdated submissions, fraudulent timing claims, or systematic data manipulation.

In some examples, CoT platform 100 may implement a volume and weight monitoring system. The volume and mass monitoring system may track commodity quantities throughout supply chain networks to identify inconsistencies in reported volumes, weights, and processing yields. The volume monitoring may analyze input-output relationships across processing events, transportation activities, and storage operations to identify discrepancies that could indicate measurement errors, unreported losses, or fraudulent quantity claims. Weight analysis may help ensure that reported commodity flows are consistent with physical constraints and processing capabilities.

In some examples, CoT platform 100 may implement cross-referencing testing to compare platform data with external databases, satellite imagery, government records, and other independent information sources, in order to identify inconsistencies or contradictions. Cross-referencing capabilities may automatically query external data sources to verify farm plot locations, facility operations, transportation routes, and other verifiable information elements. Discrepancies identified through cross-referencing may indicate data accuracy problems or potentially fraudulent submissions.

In some examples, data quality assessment capabilities of CoT platform 100 may be configured to monitor the completeness, accuracy, and consistency of submitted information, in order to identify systematic data quality issues that could affect platform reliability. Data quality monitoring may track metrics such as submission completeness rates, validation failure rates, correction frequencies, and consistency scores across different users and data categories. Data quality trends may indicate training needs, system improvements, or policy modifications that could enhance overall platform performance.

In some examples, CoT platform 100 may be configured to implement performance monitoring to track surveillance effectiveness through metrics such as anomaly detection rates, false positive rates, investigation completion times, and corrective action success rates. Performance monitoring may enable continuous improvement of surveillance procedures by identifying areas where detection capabilities could be enhanced or where process efficiencies could be achieved.

In some examples, CoT platform 100 may be configured to perform behavioral trend analysis to identify evolving patterns in user behavior and data submission practices that could indicate emerging risks or fraudulent schemes. Trend analysis may consider factors such as changes in submission patterns over time, evolution of data quality metrics, and shifts in user behavior that could indicate systematic attempts to circumvent platform controls or exploit system vulnerabilities.

In some examples, integration with grievance procedures may enable the CoT platform 100 to incorporate external reports of potential compliance issues or suspicious activities into their monitoring activities. Surveillance procedures may be configured to increase monitoring intensity for users or supply chain elements that are the subject of grievance submissions or compliance concerns reported through external channels.

Coordination with testing and inspection programs may enable surveillance findings to inform the selection of targets for detailed testing activities. Surveillance results may be utilized to identify high-risk supply chain elements that warrant priority attention from third-party testing services, enabling more efficient allocation of inspection resources based on identified risk factors.

Reporting capabilities of the CoT platform 100 may provide regular surveillance summaries to platform oversight committees and management personnel. Surveillance reports may document identified anomalies, investigation results, trends in data quality and user behavior, and recommendations for system improvements or policy modifications. Regular reporting may ensure that surveillance findings inform platform governance and operational decision-making processes.

Surveillance data retention policies may establish appropriate periods for maintaining surveillance records and investigation documentation. Data retention procedures may ensure that surveillance information is available for audit activities and historical analysis while managing storage requirements and privacy considerations. Retention policies may specify different retention periods for different types of surveillance data based on their significance and potential future utility.

In some examples the CoT platform 100 may implement a challenge process that enables users to request review of farm plot data validation methodology outcomes in circumstances where users believe their submitted data to be valid despite validation test failures. The challenge process may provide a structured mechanism for users to contest validation results and request reconsideration of farm plot data that has been designated as ineligible due to validation test failures.

The challenge process may be designed to address situations where validation test results may not accurately reflect the actual status of farm plot data due to data quality issues, mapping inaccuracies, or other factors that could cause valid farm plots to fail automated validation tests. The challenge mechanism may enable users to provide additional evidence and documentation to CoT platform 100 to support their claims that farm plot data meets compliance requirements despite initial validation test failures.

Challenge eligibility requirements may be established to ensure that the challenge process is utilized appropriately and that challenge requests include sufficient supporting evidence to warrant review. Challenge submissions may be required to include specific types of supporting evidence such as (without being limited to) alternative mapping data, ground-truth information, or documentation that addresses the specific validation test failures that triggered the challenge request.

The scope of the challenge process may be limited to specific categories of validation test failures that are amenable to review and reconsideration based on additional evidence. Certain validation tests may be excluded from the challenge process if they involve clear violations or data quality issues that cannot be addressed through additional documentation or evidence submission.

Challenge submission procedures may require users to provide detailed information about the specific farm plots and validation test failures that are the subject of the challenge request. Challenge forms may require users to identify the specific validation tests that failed, provide explanations for why the users believe the test results to be incorrect and submit supporting evidence.

Supporting evidence requirements for challenge submissions may include alternative geospatial data, independent mapping, ground-truth surveys, or other documentation that provides evidence contradicting the validation test results. The CoT platform 100 may establish specific standards for acceptable supporting evidence to ensure that challenge reviews can be conducted effectively and that submitted evidence is relevant and reliable.

Challenge review procedures may be conducted by designated review personnel or committees with appropriate expertise in geospatial analysis, agricultural practices, and compliance requirements. Challenge reviewers may assess the submitted evidence, conduct independent analysis of the contested validation results, and determine whether the original validation test outcomes should be modified based on the additional information provided.

The challenge review process may include multiple possible outcomes based on the assessment of submitted evidence and the validity of the challenge claims. Challenges may be accepted by the CoT platform 100 when submitted evidence demonstrates that farm plot data meets requirements despite initial validation test failures. Challenges may be rejected by the CoT platform 100 when submitted evidence does not adequately address the validation test failures or when the original validation results are determined to be accurate.

Challenge reviews may also result in requests for additional information by the CoT platform 100 when the submitted evidence is insufficient to make a determination or when additional clarification is needed to assess the validity of the challenge claims. Users may be provided with opportunities to submit supplementary evidence or documentation to the CoT platform 100 in order to address information gaps identified during the review process.

Challenge resolution procedures may establish timeframes for completing challenge reviews and communicating outcomes to users via the CoT platform 100. Challenge resolution may include modification of farm plot eligibility status when challenges are accepted, enabling previously ineligible farm plots to be utilized in physical flow traceability data submissions. Challenge resolution may also include detailed explanations of review findings to help users understand the basis for challenge decisions.

In some examples, the CoT platform 100 may implement a grievance procedure that provides a structured mechanism for submitting and addressing information regarding commodities or products registered within the CoT platform 100. The grievance procedure may enable users and third parties to report concerns about potential or actual compliance violations, non-compliance, or other issues that could affect the integrity of commodities or products within the traceability system of CoT platform 100. In some examples, a grievance may include any (new or historical information) indicating that a relevant product registered on the CoT platform 100, or a user of the CoT platform 100, is at risk of not complying with either applicable CoT requirements or EUDR requirements (or would be at risk of not complying with EUDR requirements if the relevant product were to be placed or made available on the EU market).

In some examples, a user of the CoT platform 100 could obtain or be made aware of a grievance in relation to a relevant product registered on the CoT platform 100 or a user of the CoT platform 100 and inform the CoT platform 100 by submitting an online grievance form, setting out the minimum information required. In some examples a natural or legal person that is not a user of the CoT platform 100 could notify the CoT platform 100 of a grievance by submitting an online grievance form, setting out the minimum information required. In some examples the CoT platform 100 could identify a grievance through operation of its program of inspections, surveillance measures, or other means and could complete and submit an internal grievance form, setting out the minimum information required.

In some examples the CoT platform 100 may accept grievances and initially review them in accordance with published procedures. In some examples a grievance committee may perform a subsequent review and determine any necessary actions in accordance with published procedures.

The CoT platform 100 may implement a complaints policy that provides structured procedures for addressing technical, operational, and user issues that may arise during operations of the CoT platform 100. The complaints policy may establish mechanisms for users to report system problems, request assistance with platform functions, and seek resolution of disputes or concerns related to platform services.

Complaint categories addressed through the complaints policy may include technical issues such as (without being limited to) system performance problems, data upload failures, or interface malfunctions that prevent users from accessing or utilizing platform functions effectively. Operational issues may include problems with validation processes, data processing delays, or service availability that affect user ability to complete required platform activities.

User-related complaints may address issues such as (without being limited to) account access problems, membership application concerns, or disputes regarding platform policies and procedures. The complaints policy may also provide mechanisms for addressing concerns about platform decision-making processes, including outcomes of grievance procedures or challenge processes that users believe to be inappropriate or unfair.

Complaint submission procedures may provide multiple channels for users to report issues to the CoT platform 100 and request assistance from the CoT platform 100 including online complaint forms, email communication, and telephone support options. Complaint submission processes may be designed to collect sufficient information about reported issues to enable effective investigation and resolution activities.

Complaint acknowledgment procedures of the CoT platform 100 may provide timely confirmation to complaint submitters that their concerns have been received and are being processed. Acknowledgment communications by the CoT platform 100 may include information about expected resolution timeframes and may provide contact information for follow-up communications regarding complaint status.

Complaint investigation procedures may involve review of reported issues by appropriate technical or operational personnel with expertise relevant to the specific complaint categories. Investigation activities may include analysis of system logs, review of user account information, assessment of platform performance data, and consultation with relevant subject matter experts.

Complaint resolution procedures may provide various remedial actions depending on the nature of identified issues including system repairs, process modifications, policy clarifications, or user assistance to address reported problems. Resolution procedures may also include corrective actions to prevent recurrence of similar issues and may involve system improvements or policy modifications based on complaint findings.

Complaint response communication via the CoT platform 100 may provide detailed information to complaint submitters about investigation findings, implemented remedial actions, and any ongoing activities to address reported concerns. Response communications may include explanations of platform decisions and may provide guidance to help users avoid similar issues in future platform interactions.

In some examples, appeal procedures may be available for users, via the CoT platform 100, who are not satisfied with complaint resolution outcomes and who wish to request additional review of their concerns. Appeal processes may provide access to senior management or independent review bodies that can assess complaint handling procedures and determine whether additional remedial actions are appropriate.

The complaints policy may establish performance standards for complaint processing including target timeframes for acknowledgment, investigation, and resolution activities. Performance monitoring may track complaint resolution effectiveness and may identify opportunities for improving complaint handling procedures and user satisfaction with platform services.

The CoT platform 100 may be configured to support additional commodities beyond the initially implemented coffee and cocoa products through adaptable system architecture and configurable validation methodologies. In general, the commodity support capabilities of CoT platform 100 may be expanded to accommodate any agricultural products that may be subject to deforestation regulations and/or other applicable regulatory frameworks. Such additional commodities may include (without being limited to) cattle, palm oil, soy, rubber, wood, and other products that are covered under existing or future regulatory requirements.

Commodity-specific configuration capabilities may enable the CoT platform 100 to adapt its data collection, validation, and assessment processes to accommodate the unique characteristics and regulatory requirements associated with different agricultural products. The CoT platform 100 may implement configurable commodity profiles that define specific data requirements, validation parameters and criteria for each supported commodity type. These commodity profiles may be customized to address the particular production methods, supply chain characteristics, and regulatory obligations associated with different agricultural products.

The CoT platform 100 may support configurable farm plot validation methodologies that can be adapted for different commodity types based on their specific agricultural and geographic characteristics. Validation parameters such as plot size thresholds, geometric requirements, and reasonability tests may be configured differently for different commodities to account for variations in typical farm sizes, production patterns, and agricultural practices. For example, cattle ranching operations may require different plot size validation parameters compared to coffee or cocoa production, while palm oil plantations may have different geometric characteristics that require specialized validation approaches.

Commodity-specific processing and transformation validation capabilities may be implemented to accommodate the diverse processing pathways and supply chain structures associated with different agricultural products. The CoT platform 100 may support configurable operation types, processing yield parameters, and transformation validation rules that reflect the specific processing methods and conversion ratios applicable to different commodities. Wood products may require validation of sawmill operations and lumber processing activities, while palm oil may require validation of oil extraction and refining processes that differ significantly from coffee or cocoa processing operations.

The CoT platform 100 may implement configurable regulatory frameworks that enable support for multiple regulatory systems beyond the initially implemented deforestation regulation requirements. Regulatory framework configuration capabilities may enable the CoT platform 100 to adapt its testing and assessment processes to support users with different legal requirements, reporting obligations, and due diligence standards established under various national and international regulatory systems.

Multi-regulation support may enable the CoT platform 100 to help users assess commodity compliance against multiple regulatory frameworks simultaneously, providing users with comprehensive testing and assessment capabilities that support them in addressing all applicable legal requirements for their supply chain operations. The CoT platform 100 may implement configurable matrices that map different regulatory requirements to specific data elements, tests, and documentation requirements within the mapping module 132 of CoT platform 100.

Configurable legal topic frameworks may enable the CoT platform 100 to adapt its lawful production and compliance risk assessment processes to address different categories of legal requirements that may be applicable under various regulatory systems. The CoT platform 100 may support customizable legal topic definitions, assessment criteria, and risk mitigation requirements that can be configured to match the specific legal frameworks applicable in different jurisdictions or under different regulatory regimes.

The CoT platform 100 may implement adaptable disclosure statement systems that can be configured to collect information relevant to different regulatory requirements. Configurable disclosure statement templates may enable the CoT platform 100 to generate customized disclosure statements that address the specific compliance topics, legal requirements, and risk assessment criteria established under different frameworks. These configurable disclosure statements may be adapted to address requirements related to environmental protection, labor standards, human rights, trade regulations, or other legal frameworks that may apply to commodity supply chains.

Regulatory mapping capabilities may enable the CoT platform 100 to maintain current information about applicable legal requirements in different countries and jurisdictions for various commodities and regulatory frameworks. The CoT platform 100 may implement configurable regulatory databases that document applicable laws, compliance requirements, and enforcement standards for different commodity types and regulatory systems. These regulatory mapping capabilities may be updated regularly to reflect changes in legal requirements and may provide users with current information about applicable compliance obligations.

Configurable risk assessment frameworks may enable the CoT platform 100 to adapt its risk evaluation processes to address different risk factors and assessment criteria established under various regulatory systems. The CoT platform 100 may support customizable risk scoring algorithms, risk factor weighting systems, and risk mitigation requirement definitions that can be configured to match the specific risk assessment methodologies required under different regulatory frameworks.

The CoT platform 100 may implement configurable validation methodology frameworks that enable adaptation of data validation processes to address different requirements and commodity characteristics. Validation test parameters, threshold values, and assessment criteria may be configured to reflect specific requirements and data quality standards established under different regulatory systems. These configurable validation capabilities may enable the CoT platform 100 to adapt with evolving regulatory requirements without requiring fundamental system modifications.

Adaptable data specification frameworks may enable the CoT platform 100 to accommodate different data collection requirements that may be established under various regulatory systems or for different commodity types. The CoT platform 100 may support configurable data field definitions, required information elements, and data format specifications that can be adapted to match the specific information requirements established under different regulatory frameworks. These adaptable data specifications may enable the CoT platform 100 to collect and manage the diverse information requirements that may be applicable to different commodities, regulatory systems or voluntary codes or compliance regimes established by users or third parties.

The CoT platform 100 may implement configurable reporting and documentation generation capabilities that enable preparation of compliance documentation for multiple regulatory frameworks simultaneously. Configurable report templates may enable the CoT platform 100 to generate due diligence statements, compliance reports, and regulatory filings that meet the specific format and content requirements established under different regulatory systems. These configurable reporting capabilities may enable users to fulfill multiple regulatory reporting obligations through a single platform interface.

Integration capabilities may enable the CoT platform 100 to connect with different regulatory reporting systems and government databases that may be established for various regulatory frameworks. The CoT platform 100 may implement configurable integration interfaces that can be adapted to communicate with different government systems, regulatory databases, and compliance reporting platforms that may be required under various legal frameworks.

The CoT platform 100 may support configurable user access and permission systems that can be adapted to accommodate different regulatory requirements and compliance responsibilities that may apply under various regulatory frameworks. User role definitions, access permissions, and data sharing controls may be configured to reflect the specific compliance obligations and information sharing requirements established under different regulatory systems.

Configurable audit and testing program frameworks may enable the CoT platform 100 to adapt its inspection and testing processes to address different requirements and compliance assessment standards. Testing protocols, inspection procedures, and documentation requirements may be configured to match the specific testing and audit standards established under different regulatory frameworks or for different commodity types.

The CoT platform 100 may implement configurable grievance and challenge procedures that can be adapted to address different types of concerns and dispute resolution requirements that may be applicable under various regulatory systems. Grievance categories, investigation procedures, and remedial action options may be configured to reflect the specific enforcement mechanisms and dispute resolution processes established under different regulatory frameworks.

Scalability features may enable the CoT platform 100 to accommodate increasing numbers of supported commodities and regulatory frameworks without compromising system performance or data management capabilities. The CoT platform 100 architecture may be designed to support horizontal scaling of processing capabilities, database storage, and user access systems to accommodate growth in supported commodities and regulatory compliance requirements.

Configuration management capabilities may enable platform administrators to implement changes to commodity support and regulatory compliance frameworks through controlled modification processes that maintain system integrity and data consistency. Configuration change procedures may include testing protocols, validation processes, and rollback capabilities that ensure system stability during implementation of new commodity or regulatory support capabilities.

The CoT platform 100 may operate through coordinated interactions between multiple system components that work together to provide comprehensive commodity traceability and due diligence validation capabilities. These component interactions may enable the CoT platform 100 to collect data from diverse sources, process information through validation methodologies, store validated results, and disseminate compliance information to authorized users throughout supply chain networks.

Systems and methods of the present disclosure may include and/or may be implemented by one or more specialized computers including specialized hardware and/or software components. For purposes of this disclosure, a specialized computer may be a programmable machine capable of performing arithmetic and/or logical operations and specially programmed to perform the functions described herein. In some embodiments, computers may comprise processors, memories, data storage devices, and/or other commonly known or novel components. These components may be connected physically or through network or wireless links. Computers may also comprise software which may direct the operations of the aforementioned components. Computers may be referred to as servers, personal computers (PCs), mobile devices, and other terms for computing / communication devices. For purposes of this disclosure, those terms used herein are interchangeable, and any special purpose computer particularly configured for performing the described functions may be used.

Computers may be linked to one another via one or more networks. A network may be any plurality of completely or partially interconnected computers wherein some or all of the computers are able to communicate with one another. It will be understood by those of ordinary skill that connections between computers may be wired in some cases (e.g., via wired TCP connection or other wired connection) or may be wireless (e.g., via a WiFi network connection). Any connection through which at least two computers may exchange data can be the basis of a network. Furthermore, separate networks may be able to be interconnected such that one or more computers within one network may communicate with one or more computers in another network. In such a case, the plurality of separate networks may optionally be considered to be a single network.

The term "computer" shall refer to any electronic device or devices, including those having capabilities to be utilized in connection with an electronic information / transaction system, such as any device capable of receiving, transmitting, processing and/or using data and information. The computer may comprise a server, a processor, a microprocessor, a personal computer, such as a laptop, palm PC, desktop or workstation, a network server, a mainframe, an electronic wired or wireless device, such as for example, a telephone, a cellular telephone, a personal digital assistant, a smartphone, an interactive television, such as for example, a television adapted to be connected to the Internet or an electronic device adapted for use with a television, an electronic pager or any other computing and/or communication device.

The term "network" shall refer to any type of network or networks, including those capable of being utilized in connection with the systems and methods described herein, such as, for example, any public and/or private networks, including, for instance, the Internet, an intranet, or an extranet, any wired or wireless networks or combinations thereof.

The term "computer-readable storage medium" should be taken to include a single medium or multiple media that store one or more sets of instructions. The term "computer-readable storage medium" shall also be taken to include any medium that is capable of storing or encoding a set of instructions for execution by the machine and that causes the machine to perform any one or more of the methodologies of the present disclosure.

Referring now to FIG. 13, a functional block diagram of a machine in the example form of computer system 1300 within which a set of instructions for causing the machine to perform any one or more of the methodologies, processes or functions discussed herein may be executed. In some examples, the machine may be connected (e.g., networked) to other machines as described above. The machine may operate in the capacity of a server or a client machine in a client-server network environment, or as a peer machine in a peer-to-peer (or distributed) network environment. The machine may be any special-purpose machine capable of executing a set of instructions (sequential or otherwise) that specify actions to be taken by that machine for performing the functions describe herein. Further, while only a single machine is illustrated, the term "machine" shall also be taken to include any collection of machines that individually or jointly execute a set (or multiple sets) of instructions to perform any one or more of the methodologies discussed herein. In some examples, one or more of components of the CoT platform 100 may be implemented by a specialized machine, particularly programmed to perform certain functions, such as the example machine shown in FIG. 13 (or a combination of two or more of such machines).

The example computer system 1300 may include processing device 1302, memory 1306, data storage device 1310 and communication interface 1312, which may communicate with each other via data and control bus 1318. In some examples, computer system 1300 may also include display device 1314 and/or user interface 1316.

Display device 1314 may be any known display technology, including but not limited to display devices using Liquid Crystal Display (LCD) or Light Emitting Diode (LED) technology.

The processing device 1302 may use any known processor technology, including but not limited to graphics processors and multi-core processors. The processing device 1302 may include, without being limited to, a microprocessor, a central processing unit, an application-specific integrated circuit (ASIC), a field programmable gate array (FPGA), a digital signal processor (DSP) and/or a network processor. The processing device 1302 may be configured to execute processing logic 1304 for performing the operations described herein. The processing device 1302 may include a special-purpose processing device specially programmed with processing logic 1304 to perform the operations described herein.

The memory 1306 may include, for example, without being limited to, at least one of a read-only memory (ROM), a random access memory (RAM), a flash memory, a dynamic RAM (DRAM) and a static RAM (SRAM), storing computer-readable instructions 1308 executable by processing device 1302. The memory 1306 may include a non-transitory computer readable storage medium storing computer-readable instructions 1308 executable by processing device 1302 for performing the operations described herein. For example, the computer-readable instructions 1308 may include operations performed by components of the CoT platform 100. Although one memory 1306 is illustrated in FIG. 13, in some examples, computer system 1300 may include two or more memory devices (e.g., dynamic memory and static memory).

The user interface 1316 may be any known input device technology, including but not limited to a keyboard (including a virtual keyboard), mouse, track ball, camera, and touch-sensitive pad or display.

The data and control bus 1318 may be any known internal or external bus technology, including but not limited to industry standard architecture (ISA), extended ISA (EISA), peripheral component interconnect (PCI), PCI Express, universal serial bus (USB), Serial advanced technology attachment (ATA) or FireWire.

The computer system 1300 may include communication interface 1312, for direct communication with other computers (including wired and/or wireless communication) and/or for communication with a network. In some examples, computer system 1300 may include display device 1314 (e.g., a liquid crystal display (LCD), a touch sensitive display, etc.).

In some examples, the computer system 1300 may include data storage device 1310 storing instructions (e.g., software) for performing any one or more of the functions described herein. Data storage device 1310 may include a non-transitory computer-readable storage medium, including, without being limited to, solid-state memories, optical media and magnetic media.

One or more features or steps of the disclosed embodiments may be implemented using an API. An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

The methods described herein, including those with reference to one or more flowcharts, may be performed by a controller and/or processing device (e.g., smartphone, computer, etc.). The methods may include one or more operations, functions, or actions as illustrated in one or more of blocks. Although the blocks are illustrated in sequential order, these blocks may also be performed in parallel, and/or in a different order than the order disclosed and described herein. Also, the various blocks may be combined into fewer blocks, divided into additional blocks, and/or removed based upon a desired implementation. Dashed lines may represent optional and/or alternative steps.

Additional examples of the presently described method and device embodiments are suggested according to the structures and techniques described herein. Other non-limiting examples may be configured to operate separately or may be combined in any permutation or combination with any one or more of the other examples provided above or throughout the present disclosure. Components and/or arrangement of components illustrated in one figure may be incorporated into any other figure.

While the present disclosure has been discussed in terms of certain embodiments, it should be appreciated that the present disclosure is not so limited. The embodiments are explained herein by way of example, and there are numerous modifications, variations and other embodiments that may be employed that would still be within the scope of the present disclosure.

It will be appreciated by those skilled in the art that the present disclosure may be embodied in other specific forms without departing from the spirit or essential characteristics thereof. The presently disclosed embodiments are therefore considered in all respects to be illustrative and not restricted. The scope of the disclosure is indicated by the appended claims rather than the foregoing description and all changes that come within the meaning and range and equivalence thereof are intended to be embraced therein.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The terms "including" and "comprising" should be interpreted as meaning "including, but not limited to." If not already set forth explicitly in the claims, the term "a" should be interpreted as "at least one" and the terms "the, said, etc." should be interpreted as "the at least one, said at least one, etc."

The present disclosure is described with reference to block diagrams and operational illustrations of methods and devices. It is understood that each block of the block diagrams or operational illustrations, and combinations of blocks in the block diagrams or operational illustrations, may be implemented by means of analog or digital hardware and computer program instructions. These computer program instructions may be provided to a processor of a general purpose computer to alter its function as detailed herein, a special purpose computer, ASIC, or other programmable data processing apparatus, such that the instructions, which execute via the processor of the computer or other programmable data processing apparatus, implement the functions/acts specified in the block diagrams or operational block or blocks. In some alternate implementations, the functions/acts noted in the blocks may occur out of the order noted in the operational illustrations. For example, two blocks shown in succession may be executed substantially concurrently or the blocks may sometimes be executed in the reverse order, depending upon the functionality/acts involved.

For the purposes of this disclosure a non-transitory computer readable medium (or computer-readable storage medium/media) stores computer data, which data may include computer program code (or computer-executable instructions) that is executable by a computer, in machine readable form. By way of example, and not limitation, a computer readable medium may comprise computer readable storage media, for tangible or fixed storage of data, or communication media for transient interpretation of code-containing signals. Computer readable storage media, as used herein, refers to physical or tangible storage (as opposed to signals) and includes without limitation volatile and non-volatile, removable and non-removable media implemented in any method or technology for the tangible storage of information such as computer-readable instructions, data structures, program modules or other data. Computer readable storage media includes, but is not limited to, RAM, ROM, EPROM, EEPROM, flash memory or other solid state memory technology, CD-ROM, DVD, or other optical storage, cloud storage, magnetic cassettes, magnetic tape, magnetic disk storage or other magnetic storage devices, or any other physical or material medium which may be used to tangibly store the desired information or data or instructions and which may be accessed by a computer or processor.

A computing device may be capable of sending or receiving signals, such as via a wired or wireless network, or may be capable of processing or storing signals, such as in memory as physical memory states, and may, therefore, operate as a server. Thus, devices capable of operating as a server may include, as examples, dedicated rack-mounted servers, desktop computers, laptop computers, set top boxes, integrated devices combining various features, such as two or more features of the foregoing devices, or the like.

It is the Applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

## Claims

1. A system comprising:
a data interface, an application programming interface ("API"), and an interactive graphical user interface ("GUI") each configured to receive, via a network, data associated with at least one commodity from a plurality of data sources, the data associated with a supply chain process for the at least one commodity, the data comprising traceability data and other data;
a data mapper configured to aggregate the data from among the plurality of data sources and map the data to a set of commodity-associated data;
a data validator configured to execute one or more validation tests of the set of commodity-associated data to determine whether the set of commodity-associated data complies with one or more predefined requirements;
one or more databases configured to store one or more of the received data, the set of commodity-associated data, validation results of the one or more validation tests, and reference data;
one or more servers configured to retrieve the received data, the set of commodity-associated data and the validation results from the one or more databases and generate one or more interactive presentations; and
the interactive graphical user interface ("GUI") configured to disseminate, via the network, the one or more interactive presentations to one or more user devices.

2. The system of claim 1, wherein the traceability data comprises one or more of farm plot data, production data, and physical flow data, and wherein the other data comprises compliance data.

3. The system of claim 2, wherein
a) the farm plot data comprises polygon data defining boundaries of agricultural plots and point data indicating specific locations within the agricultural plots and, wherein the one or more validation tests preferably comprise one or more of a geometry test of the polygon data, a deforestation test, a protected area test, and a plot size test, or
b) one or more of the production data and the compliance data is based on user input to one or more disclosure statements disseminated via the interactive GUI, or
c) the physical flow data is provided by the plurality of data sources at every event of a plurality of events in the supply chain process.

4. The system of claim 3,
wherein the plurality of events comprise one or more of a create parcel event, a transportation event, a warehousing event, an operation event, a shipping event, and a terminate parcel event,
wherein the one or more validation tests preferably comprise cross-referencing one or more of the production data, the compliance data and the physical flow data with the farm plot data,
wherein the cross-referencing is preferably based one or more of a farmer identifier and a farm plot identifier.

5. The system of claim 3, further comprising:
creating a traceability tree linking each of the plurality of events based on the one or more validation tests.

6. A method comprising:
receiving, by one or more of a data interface, an application programming interface ("API"), and an interactive graphical user interface ("GUI"), data associated with at least one commodity from a plurality of data sources via a network, the data associated with a supply chain process for the at least one commodity, the data comprising traceability data and other data;
aggregating and mapping, by a data mapper, the data from among the plurality of data sources to a set of commodity-associated data;
executing, by a data validator, one or more validation tests of the set of commodity-associated data to determine whether the set of commodity-associated data complies with one or more predefined requirements;
storing, by one or more databases, one or more of the received data, the set of commodity-associated data, validation results of the one or more validation tests, and reference data;
retrieving, by one or more servers, the received data, the set of commodity-associated data and the validation results from the one or more databases;
generating, by the one or more servers, one or more interactive presentations; and
disseminating, by the interactive graphical user interface ("GUI"), via the network, the one or more interactive presentations to one or more user devices.

7. The method of claim 6, wherein the traceability data comprises one or more of farm plot data, production data, and physical flow data, and wherein the other data comprises compliance data.

8. The method of claim 7, wherein
a) the farm plot data comprises polygon data defining boundaries of agricultural plots and point data indicating specific locations within the agricultural plots, wherein the one or more validation tests preferably comprise one or more of a geometry test of the polygon data, a deforestation test, a protected area test, and a plot size test, or
b) one or more of the production data and the compliance data is based on user input to one or more disclosure statements disseminated via the interactive GUI, or
c) the physical flow data is provided by the plurality of data sources at every event of a plurality of events in the supply chain process.

9. The method of claim 8, wherein the plurality of events comprise one or more of a create parcel event, a transportation event, a warehousing event, an operation event, a shipping event, and a terminate parcel event, wherein the one or more validation tests preferably comprise cross-referencing one or more of the production data, the compliance data and the physical flow data with the farm plot data, wherein the cross-referencing is preferably based one or more of a farmer identifier and a farm plot identifier.

10. The method of claim 8, further comprising:
creating a traceability tree linking each of the plurality of events based on the one or more validation tests.

11. A non-transitory computer-readable storage medium configure to store computer readable instructions that, when executed by a processor, cause the processor to perform the steps of:
receiving, by one or more of a data interface, an application programming interface ("API"), and an interactive graphical user interface ("GUI"), data associated with at least one commodity from a plurality of data sources via a network, the data associated with a supply chain process for the at least one commodity, the data comprising traceability data and other data;
aggregating and mapping the data from among the plurality of data sources to a set of commodity-associated data;
executing one or more validation tests of the set of commodity-associated data to determine whether the set of commodity-associated data complies with one or more predefined requirements;
storing, via one or more databases, one or more of the received data, the set of commodity-associated data, validation results of the one or more validation tests, and reference data;
retrieving the received data, the set of commodity-associated data and the validation results from the one or more databases;
generating one or more interactive presentations; and
disseminating, by the interactive graphical user interface ("GUI"), via the network, the one or more interactive presentations to one or more user devices.

12. The non-transitory computer-readable storage medium of claim 11, wherein the traceability data comprises one or more of farm plot data, production data, and physical flow data, and wherein the other data comprises compliance data.

13. The non-transitory computer-readable storage medium of claim 12, wherein
a) the farm plot data comprises polygon data defining boundaries of agricultural plots and point data indicating specific locations within the agricultural plots, wherein the one or more validation tests preferably comprise one or more of a geometry test of the polygon data, a deforestation test, a protected area test, and a plot size test, or
b) one or more of the production data and the compliance data is based on user input to one or more disclosure statements disseminated via the interactive GUI, or
c) the physical flow data is provided by the plurality of data sources at every event of a plurality of events in the supply chain process.

14. The non-transitory computer-readable storage medium of claim 13,
wherein the plurality of events comprise one or more of a create parcel event, a transportation event, a warehousing event, an operation event, a shipping event, and a terminate parcel event ,
wherein the one or more validation tests preferably comprise cross-referencing one or more of the production data, the compliance data and the physical flow data with the farm plot data,
wherein the cross-referencing is preferably based one or more of a farmer identifier and a farm plot identifier.

15. The non-transitory computer-readable storage medium of claim 13, wherein the computer readable instructions, when executed by a processor, further cause the processor to perform the steps of:
creating a traceability tree linking each of the plurality of events based on the one or more validation tests.
